# EUROPÄISCHE PATENTSCHRIFT

(11) **EP 2 537 424 B1**
(45) Veröffentlichungstag und Bekanntmachung des Hinweises auf die Patenterteilung: **30.04.2014**
(21) Anmeldenummer: 11171094.3
(22) Anmeldetag: 22.06.2011
(51) Int. Cl.: A23L 1/29, A23L 1/304, A23L 1/305

(54) **Hochkalorische, proteinreiche enterale Sondennahrung**
High calorie, protein-rich enteral tube feeding
Nutriment hautement calorique et riche en protéines, pour alimentation entérale par sonde

(43) Veröffentlichungstag der Anmeldung: 26.12.2012
(73) Patentinhaber: Fresenius Kabi Deutschland GmbH, 61352 Bad Homburg (DE)
(72) Erfinder: Datky, Armin, 61191 Rosbach (DE); Schwejda-Güttes, Susann, 61279 Grävenwiesbach (DE); Riedel, Angelika, 61279 Grävenwiesbach (DE)

(56) Entgegenhaltungen:
- WO-A1-02/098242
- WO-A1-2005/096845
- WO-A1-2009/072885
- US-A- 5 683 984

## Beschreibung

### Gebiet der Erfindung

Die Erfindung betrifft eine hochkalorische enterale Sondennahrung, die protein- und mineralstoffreich und zur Verabreichung über eine Ernährungssonde geeignet ist, sowie deren Verwendung.

### Hintergrund der Erfindung

Durch eine Erkrankung kann es zu Veränderungen im Energie-, Protein- und/oder Mineralstoffhaushalt eines Patienten kommen. So haben verschiedene Patientengruppen einen im Vergleich zu Gesunden erhöhten Energiebedarf. Gleichzeitig ist auf Grund der Erkrankung der Patienten aber eine Deckung des erhöhten Energiebedarfs oft nicht durch eine einfache Mehraufnahme von Nahrung möglich, so dass stattdessen Nahrung mit einem besonders hohen Energiegehalt verabreicht werden muss.

Ein hoher Proteingehalt der Nahrung ist bei vielen Erkrankungen von Vorteil. Protein trägt zum Erhalt und/oder Aufbau der Körpermasse bei, was zum Beispiel die Funktionalität der Muskulatur erhöht. Darüber hinaus ist eine ausreichende Versorgung mit Protein für eine Vielzahl physiologischer Prozesse, wie etwa für die Bildung von Plasmaproteinen, notwendig. Besonders bei Patienten mit chronischen oder katabolen Erkrankungen besteht zudem krankheitsbedingt ein gegenüber Gesunden erhöhter Proteinbedarf.

Oft geht ein erhöhter Energiebedarf bei vielen Patienten mit einem erhöhten Proteinbedarf einher, so dass diese Patienten eine Nahrung benötigen, die zugleich besonders energie- und proteinreich ist. Beispiele hierfür sind chronisch obstruktive Lungenerkrankungen, Krebserkrankungen, Nierenversagen mit Nierenersatztherapie oder Herzinsuffizienz.

Eine hochkalorische und proteinreiche Nahrung ist auch besonders gut für die Ernährung von Patienten geeignet, die auf Grund ihrer Erkrankung einer Flüssigkeits- oder Volumenrestriktion unterliegen, dass heißt, die pro Tag nur eine bestimmte, vergleichsweise geringe Menge an Flüssigkeit zu sich nehmen dürfen. Patienten, die einer Flüssigkeits- oder Volumenrestriktion unterliegen, profitieren von einer Nahrung, die hochkalorisch und zugleich auch proteinreich ist, da durch die Aufnahme dieser Nahrung der tägliche Energie- und Proteinbedarf bereits mit einem geringeren Volumen verabreichter Nahrung gedeckt werden kann, als dies bei der Aufnahme herkömmlicher Nahrung der Fall ist.

Es gibt also viele Patientengruppen, die im Vergleich zu Gesunden zugleich einen erhöhten Bedarf an Energie und an Protein haben. Darüber hinaus unterliegen viele Patienten einer Flüssigkeits- oder Volumenrestriktion. Gerade hier ist es wichtig, die benötigten Kalorien und das benötigte Protein in einem möglichst kleinen Volumen zur Verfügung zu stellen. Dies gilt besonders für Patienten, die auf Grund ihrer Erkrankung einen erhöhten Kalorien- und Proteinbedarf haben und darüber hinaus einer Flüssigkeits- oder Volumenrestriktion unterliegen, wie zum Beispiel Patienten mit chronisch obstruktiven Lungenerkrankungen, Herzinsuffizienz oder akutem oder chronischem Nierenversagen mit Nierenersatztherapie.

Im Stand der Technik werden bereits hochkalorische und proteinreiche Trinklösungen bereitgestellt. Allerdings sind Trinklösungen nur für solche Patienten geeignet, die in der Lage sind, Nahrung selbständig über den Mund aufzunehmen und zu schlucken. Zudem ist der Mineralstoffgehalt dieser Trinklösungen eher gering, und bei ausschließlicher Ernährung mit diesen Produkten müssen Mineralstoffe supplementiert werden.

Problematisch ist dagegen die ausreichende Versorgung von Patienten mit erhöhtem Energie-und Proteinbedarf die, beispielsweise auf Grund einer Erkrankung, allgerneiner Schwäche oder einer Schluckstörung, nicht in der Lage sind, Nahrung selbständig aufzunehmen. Diesen Patienten kann Nahrung nur über eine Sonde zugeführt werden. Im Allgemeinen ist es dabei bevorzugt, die Nahrung enteral über eine Ernährungssonde in den Magen-Darmtrakt des Patienten zu verabreichen.

Da Emährungssonden zur enteralen Ernährung nur einen geringen Innendurchmesser aufweisen, darf die Viskosität der zu verabreichenden Sondennahrung nicht zu hoch sein, da sie sonst nicht mehr über die Ernährungssonde zugeführt werden kann und zudem die Gefahr besteht, dass die Sonde teilweise oder vollständig verschließt und ausgewechselt werden muss.

Allerdings nimmt die Viskosität von Sondennahrung mit zunehmender Energiedichte der Nahrung stark zu. Besonders stark ist die Viskositätszunahme, wenn der Gehalt an Protein in der Sondennahrung erhöht wird. Die Herstellung einer hochkalorischen und proteinreichen Sondennahrung, die auf Grund ihrer Viskosität noch zur enteralen Verabreichung geeignet ist, ist daher schwierig.

Im Stand der Technik wurde das Problem bislang durch die Bereitstellung von hochkalorischen und proteinreichen enteralen Sondennahrungen gelöst, die einen sehr geringen Mineralstoffgehalt, insbesondere an Magnesium, aber auch an Natrium und Chlorid, haben. Durch einen niedrigen Mineralstoffgehalt kann die Viskosität von Sondennahrungen verringert werden, so dass sie zur Verabreichung über eine Ernährungssonde geeignet sind.

Allerdings ist eine möglichst bedarfsdeckende Versorgung mit Mineralstoffen, insbesondere mit Magnesium, Natrium und Chlorid, durch die enterale Sondennahrung äußerst wünschenswert, da viele enteral ernährte Patienten ausschließlich durch die Sondennahrung ernährt werden, und eine ergänzende orale Aufnahme von Mineralstoffen somit oft nicht möglich ist.

Besonders enteral ernährte Patienten, die einer Flüssigkeits- und Volumenrestriktion unterliegen, würden von einer hochkalorischen und proteinreichen enteralen Sondennahrung mit einem hohen, möglichst bedarfsdeckenden Mineralstoffgehalt profitieren, da so eine ausreichende Versorgung der Patienten bereits durch ein vergleichsweise geringes Volumen an Sondennahrung erreicht werden kann, ohne dass den Patienten zusätzlich großvolumige Elektrolytlösungen verabreicht werden müssen.

Auch in der längerfristigen enteralen Ernährung ist eine adäquate Versorgung mit Mineralstoffen zur Vorbeugung von Mangelerscheinungen und Folgeerkrankungen besonders wichtig.

Es besteht also das Problem, eine sowohl hochkalorische als auch proteinreiche Sondennahrung mit einer geeigneten Mineralstoffzusammensetzung zur Verfügung zu stellen, die auf Grund ihrer Viskosität zur enteralen Verabreichung über eine Ernährungssonde geeignet ist. Das Problem wird durch die nachfolgend ausgeführte Erfindung gelöst.

WO 02/098242 A1 offenbart eine ausgewogene Komplettnahrung mit einer Energiedichte von mindestens 2,25 kcal/ml, wobei die Eiweißquelle Kasein umfasst, und die für die Sondennahrung geeignet ist wegen der niedrigen Viskosität, vorzugsweise 80-100 centipoise. Vorzugsweise sind 80-102 g/l Eiweiß enthalten. In einem Ausführungsbeispiel hat das Produkt die folgenden Eigenschaften: 90 g/l Eiweiß, 2,25 kcal/ml, 1200 mg/l Na, 1194 mg/l Cl. Das Produkt wird einer thermischen Behandlung unterworfen. Die Zusammensetzung ist geeignet für die Ernährung von Kranke, z.B. Personen die an Unterernährung leiden.

WO 2005/096845 A1 offenbart eine flüssige, ausgewogene Komplettnahrung mit einer Energiedichte von mindestens 1,45 kcal/ml, Kohlenhydrate i.H. von 17-27 g per 100 ml, Eiweiß i.H. von 7.8-12 g per 100 ml, wobei mindestens 70 Gew.-% des Eiweiß erhalten wird durch Demineralisation von Milch, und die Eiweißfraktion zwischen 25-37 Gew.-% Molkenprotein enthält. Vorzugsweise besteht die Eiweißfraktion zu 60-90% aus Kasein, ist die Energiedichte bis 2.25 kcal/ml, die Osmolarität zwischen 360-480 mOsm/l, enthält Mineralstoffe in RDA-Mengen. Die Zusammensetzung hat eine relativ niedrige Viskosität, insbesondere 20-40 mPa.s bei einer Scherrate von 100.s⁻¹ und bei einer Temperatur von 20°C, und ist insbesondere geeignet für die Ernährung von Kachexiepatienten.

WO 2009/072885 A1 offenbart eine flüssige, ausgewogene, niedrigvisköse Sondennahrung mit einer Energiedichte von mindestens 2,0 kcal/ml, welche 6-14 g/100 ml Eiweiß enthält, und die Eiweißfraktion mizelläres Kasein, Caseinat und optional Molkenprotein umfasst. Das Produkt wird einer thermischen Behandlung, z.B. Sterilisation (4 Minuten bei 124°C), unterworfen, und enthält Mineralstoffe in 100% RDA-Mengen. Vorzugsweise ist die Viskosität 20-45 mPa.s bei 20°C und einer Scherrate von 100.s⁻¹, und ist die Osmolarität unter 700 mOsm/l.

US 5 683 984 A offenbart, daß in Sondennahrungen, welche sterilisiert werden müssen, vorzugsweise natives, mizelläres Kasein verwendet werden sollte, um Koagulation zu vermeiden, und eine niedrige Viskosität des Endprodukts zu ermöglichen.

### Zusammenfassende Beschreibung der Erfindung

Die Erfindung betrifft eine hochkalorische enterale Sondennahrung mit einem Energiegehalt von mindestens 2,0 kcal/mL, dadurch gekennzeichnet, dass die hochkalorische enterale Sondennahrung etwa 8,0 g bis etwa 14,0 g Protein pro 100 mL sowie einen Mineralstoff umfasst, der ausgewählt ist aus der Gruppe bestehend aus mindestens 20 mg/100 mL Magnesium, mindestens 70 mg/100 mL Natrium, mindestens 90 mg/100 mL Chlorid oder einer Kombination davon, wie beansprucht.

Die hochkalorische enterale Sondennahrung kann einen Mineralstoff umfassen, der ausgewählt ist aus der Gruppe bestehend aus 20 mg bis 50 mg pro 100 mL Magnesium, 70 mg bis 130 mg pro 100 mL Natrium, 90 mg bis 160 mg pro 100 mL Chlorid oder einer Kombination davon. Bevorzugt umfasst die hochkalorische enterale Sondennahrung 20 mg bis 50 mg pro 100 mL Magnesium, 70 mg bis 130 mg pro 100 mL Natrium und 90 mg bis 160 mg pro 100 mL Chlorid. Die hochkalorische enterale Sondennahrung kann etwa 9,0 g bis etwa 14,0 g/100 mL Protein umfassen. Bevorzugt umfasst die hochkalorische enterale Sondennahrung etwa 10,0 g bis etwa 14,0 g/100 mL Protein. Eine am meisten bevorzugte hochkalorische enterale Sondennahrung umfasst etwa 10,0 g bis etwa 12,0 g/100 mL Protein.

Die erfindungsgemäße hochkalorische enterale Sondennahrung hat eine Energiedichte von 2,0 kcal bis 3,5 kcal/mL, bevorzugt eine Energiedichte von 2,0 kcal bis 3,0 kcal/mL. Am meisten bevorzugt ist eine hochkalorische enterale Sondennahrung mit einer Energiedichte von 2,0 kcal/mL bis 2,4 kcal/mL.

Das in der erfindungsgemäßen hochkalorischen enteralen Sondennahrung enthaltene Protein umfasst Gesamtmilchprotein und Calcium Caseinat, wobei das Protein bevorzugt etwa 20% Gew. bis etwa 70% Gew. Gesamtmilchprotein und etwa 80% Gew. bis etwa 30% Gew. Calcium-Caseinat umfasst. An meisten bevorzugt besteht das Protein aus etwa 40% Gew. Gesamtmilchprotein und etwa 60% Gew. Calcium-Caseinat.

Das Gesamtmilchprotein kann aus etwa 90% bis etwa 94% Casein und aus etwa 6% bis etwa 10% Molkenprotein bestehen. Dabei ist es bevorzugt, dass das Gesamtmilchprotein aus 92%) Casein und 8% Molkenprotein besteht.

Die erfindungsgemäße hochkalorische enterale Sondennabrung besitzt eine Viskosität von etwa 50 bis etwa 180 mPa s, gemessen bei einer Temperatur von 20 °C und einer Scherrate von 1 s⁻¹. Eine hochkalorische enterale Sondennahrung mit einer Viskosität von etwa 50 bis etwa 160 mPa s, gemessen bei einer Temperatur von 20 °C und einer Scherrate von 1 s⁻¹, ist bevorzugt. Am meisten bevorzugt ist eine hochkalorische enterale Sondennahrung mit einer Viskosität von etwa 60 bis etwa 150 mPa s, gemessen bei einer Temperatur von 20 °C und einer Scherrate von 1 s⁻¹.

Die hochkalorische enterale Sondennahrung kann eine Osmolarität von etwa 350 bis etwa 700 mosmol/L besitzen, bevorzugt besitzt die hochkalorische enterale Sondennahrung eine Osmolarität von etwa 420 mosmol/L bis etwa 500 mosmol/L, am meisten bevorzugt besitzt die hochkalorische enterale Sondennahrung eine Osmolarität von etwa 420 mosmol/L bis etwa 440 mosmol/L.

In einer weiteren, besonders bevorzugten Ausführungsform umfasst die hochkalorische enterale Sondennahrung mindestens einen weiteren Minetalstoff, der ausgewählt ist aus der Gruppe bestehend aus 100 mg bis 190 mg pro 100 mL Kalium, 150 mg bis 220 mg pro 100 mL Calcium, 90 mg bis 150 mg pro 100 mL Phosphor oder einer Kombination davon, bevorzugt wobei die hochkalorische enterale Sondennahrung pro 100 mL 30 mg Magnesium, 80 mg Natrium, 160 mg Kalium, 200 mg Calcium, 120 mg Phosphor und 126 mg Chlorid umfasst. In einer weiteren Ausführungsform enthält die hochkalorische enterale Sondennahrung Natrium und Chlorid in äquimolarer Menge.

Gemäß einer weiteren Ausführungsform stammen 32% bis 38% des Energiegehalts der hochkalorischen enteralen Sondennahrung aus Kohlenhydraten.

In einer weiteren, ganz besonders bevorzugten Ausfuhrungsform enthält die hochkalorische enterale Sondennahrung keine Saccharose.

Die hochkalorische enterale Sondennahrung kann wenigstens einen Bestandteil, der ausgewählt ist aus der Gruppe bestehend aus Spurenelementen, Vitaminen, Ballaststoffe, MCT, Omega-3 Fettsäuren, Omega-6 Fettsäuren, Fischöl oder einer Kombination davon umfassen.

Die erfindungsgemäße hochkalorische enterale Sondennahrung kann enteral an einen Patienten verabreicht werden.

Der Patient kann eine Erkrankung haben, die ausgewählt ist aus der Gruppe bestehend aus kardiovaskuläre Erkrankung, chronisch obstruktive Lungenerkrankung, kardiales, renales oder hepatogenes Ödem, LungenÖdem, Erkrankung der Leber, Aszites, Nierenerkrankungen, neurologische Erkrankung, Krebserkrankung, schwere und/oder lang anhaltende Infektion, Trauma, Peritonitis, Sepsis, Verbrennung, Dekubitus, Mukoviszidose oder einer Kombination davon.

Der Patient kann einer Flüssigkeitsrestriktion unterliegen und die Erkrankung kann ausgewählt sein aus der Gruppe bestehend aus chronisch obstruktiver Lungenerkrankung, Herzinsuffizienz, Aszites, chronischem oder akutem Nierenversagen bei Patienten mit Nierenersatztherapie und Kombinationen davon.

Die erfindungsgemäße hochkalorische enterale Sondennahrung kann in der Behandlung oder Vorbeugung von Kachexie, Proteinmangel oder Protein-Energie Mangelsyndrom bei einem Patienten verwendet werden.

Bereitgestellt wird ein Verfahren zur Herstellung einer erfindungsgemäßen hochkalorischen enteralen Sondennahrung, umfassend die Schritte:
a) Mischen der in der hochkalorischen enteralen Sondennahrung enthaltenen Bestandteile; und
b) Erhitzen der in Schritt a) erhaltenen Mischung auf 120 °C bis 145 °C, wobei das Erhitzen in Schritt b) erfolgt, bis ein F₀-Wert von 6 bis 15 erreicht ist.

In einer bevorzugten Ausführungsform des Verfahrens umfasst die hochkalorische enterale Sondennahrung Gesamtmilchprotein umfassend etwa 80% Gew. Casein und etwa 20% Gew. Molkenprotein. In dieser Ausführungsform erfolgt das Erhitzen in Schritt b) bei 120 °C bis 130 C, bevorzugt bei 126 °C bis 129 °C.

In einer weiteren bevorzugten Ausfuhrungsform des Verfahrens umfasst die hochkalorische enterale Sondennahrung Gesamtmilchprotein umfassend etwa 90% Gew. bis etwa 99% Gew. Casein und etwa 1% Gew. bis etwa 10% Gew. Molkenprotein. Dabei ist es bevorzugt, dass das Gesamtmilchprotein etwa 92% Gew. Casein und etwa 8% Gew. Molkenprotein umfasst. In dieser Ausführungsform erfolgt das Erhitzen in Schritt b) bei 136 °C bis 145 °C, bevorzugt bei 138 °C bis 143 °C.

Weitere Ausführungsformen der Erfindung sind aus der folgenden eingehenden Beschreibung ersichtlich.

### Eingehende Beschreibung der_Erfindung

Mit der Erfindung wird eine hochkalorische und proteinreiche enterale Sondennahrung mit einer Energiedichte von mindestens 2,0 kcal/mL, einem Proteingehalt von etwa 8,0 g/100 mL bis etwa 14 g/100 mL und einer besonders vorteilhaften Mineralstoffzusammensetzung bereitgestellt.

Die erfindungsgemäße enterale Sondennahrung kann auf Grund ihrer geringen Viskosität trotz des hohen Gehalts an Kalorien und Protein problemlos Über eine Ernährungssonde verabreicht werden. Dabei weißt die erfindungsgemäße enterale Sondennahrung dennoch einen hohen Gehalt an Mineralstoffen auf. Die erfindungsgemäße enterale Sondennahrung umfasst mindestens einen Mineralstoff, der ausgewählt ist aus der Gruppe bestehend aus mindestens 20 mg pro 100 mL Magnesium, mindestens 70 mg pro 100 mL Natrium, mindestens 90 mg pro 100 mL Chlorid oder einer Kombination davon.

Durch die erfindungsgemäße enterale Sondennahrung werden enteral ernährte Patienten in vorteilhafter Weise mit Mineralstoffen versorgt. In einer bevorzugten Ausfühmngsform ist die erfindungsgemäße enterale Sondennahrung zur voll bilanzierten, bedarfsdeckenden enteralen Ernährung auch über lange Zeiträume geeignet.

Von der erfindungsgemäßen enteralen Sondennahrung profitieren besonders ältere Menschen, Patienten, die einer Flüssigkeitsrestriktion unterliegen, und Patienten mit einem erhöhten Bedarf an Protein und/oder Kalorien. Ganz besonders geeignet ist die erfindungsgemäße enterale Sondennahrung zur Verabreichung an Patienten mit einem erhöhten Bedarf an Protein und/oder Kalorien, die zudem auf Grund ihrer Erkrankung einer Flüssigkeitsrestriktion unterliegen. Dies sind beispielsweise Patienten mit chronisch obstruktiver Lungenerkrankung, Herzinsuffizienz oder chronischer oder akuter Niereninsuffizienz mit Nierenersatztherapie.

Durch die besonders günstige Mineralstoffzusammensetzung kann eine ausreichende Versorgung mit Mineralstoffen, insbesondere mit Magnesium, Natrium, und Chlorid, aber auch mit Calcium, Phosphor und Kalium auch bei ausschließlich enteraler Ernährung sichergestellt werden.

Darüber hinaus bietet die erfindungsgemäße enterale Sondennahrung trotz der hohen Energiedichte und des hohen Gehalts an Protein und Mineralstoffen eine geeignete Osmolarität, um Komplikationen der enteralen Ernährung, wie etwa Diarrhö, wirksam vorzubeugen. Auch bei lange anhaltender Versorgung mit der erfindungsgemäßen enteralen Sondennahrung kommt es nicht zu Mineralmangelerscheinungen. Die besonderen Bedürfnisse der Patientengruppen bezüglich Osmolarität und Mineralstoffversorgung werden in der Formulierung berücksichtigt.

Die erfindungsgemäße enterale Sondennahrung zeichnet sich trotz der hohen Energiedichte sowie einem hohen Gehalt an Protein und an Mineralstoffen durch eine ausgezeichnete Stabilität, Fließfähigkeit und Lagerfähigkeit aus. Insbesondere Magnesium kann über die erfindungsgemäße enterale Sondennahrung in hoher Menge an enteral ernährte Patienten verabreicht werden.

Bereitgestellt wird auch ein Verfahren, mit dem in vorteilhafter Weise eine besonders stabile, fließfähige enterale Sondennahrung hergestellt werden kann, die hochkalorisch und proteinreich ist und über eine günstige Mineralstoffzusammensetzung verfügt. Insbesondere ermöglicht das Verfahren eine sichere Sterilisation der enteralen Sondennahrung bei hohen Erhitzungstemperaturen unter Beibehaltung einer günstigen, zur Verabreichbarkeit der enteralen Sondennahrung über eine Ernährungssonde erforderlichen niedrigen Viskosität.

Im Folgenden wird die Erfindung eingehender beschrieben. Die Überschriften sollen dabei der einfachen Orientierung dienen und sind nicht als limitierend aufzufassen. Wird im Folgenden ein Wertebereich genannt, so sind alle Einzelwerte des Wertebereichs ebenfalls offengelegt.

### Definitionen:

Die Verabreichung von Nahrung kann im Allgemeinen oral (d.h. durch Aufnahme über den Mund), parenteral (d.h. unter Verabreichung der Nahrung mittels Infusion in die Blutbahn) und/oder **enteral** (d.h. unter Verabreichung der Nahrung mittels Ernährungssonde in den Magen-Darmtrakt) erfolgen.

Unter **Sondennahrung** im Sinne der hier vorliegenden Erfindung wird eine Nahrung verstanden, die über eine Ernährungssonde enteral verabreicht werden kann.

Bei einer **Ernährungssonde** handelt es sich um eine Sonde, durch die einem Individuum, zum Beispiel einem Patienten, Sondennahrung und/oder Flüssigkeit verabreicht werden können. Die Sonde kann ein Schlauch sein oder einen Schlauch umfassen, der aus einem geeigneten Material, beispielsweise aus Polyurethan und/oder Silikonkautschuk besteht.

Die Verabreichung von Sondennahrung mittels Ernährungssonde unter Einbeziehung des Magen-Darmtrakts wird als **enterale Ernährung** bezeichnet. Die erfindungsgemäße Sondennahrung kann auch als "**enterale Sondennahrung**" bezeichnet werden.

Bei einer Ernährungssonde zur enteralen Ernährung kann es sich beispielsweise um eine transnasale Sonde oder eine perkutane Sonde handeln. Bei der transnasalen Sonde erfolgt die Verabreichung von Nahrung mittels Sonde durch die Nase in den Magen oder Darm. Bei der perkutanen Sonde erfolgt die Verabreichung von Nahrung mittels Sonde durch die Bauchdecke in den Magen oder Darm. Ist im Bezug auf die hier vorliegende Erfindung von einer Ernährungssonde die Rede, ist eine Ernährungssonde gemeint, die auf Grund ihrer Beschaffenheit und des durch sie geschaffenen Zugangs der enteralen Ernährung eines Individuums, beispielsweise eines Patienten, dient.

Der Ausdruck "**etwa**", wie hier im Bezug auf Zahlenwerte verwendet, bezeichnet eine Abweichung vom genannten Zahlenwert deren Größe unter Anderem durch die Genauigkeit der Bestimmungsmethode des Zahlenwerts bestimmt wird. Typischerweise beträgt eine solche Abweichung ± 5% des genannten Zahlenwertes.

Als hochkalorisch im Sinne der hier vorliegenden Erfindung wird eine Sondennahrung bezeichnet, deren Energiedichte mindestens 2,0 kcal / mL beträgt. Wie hier verwendet gibt die **Energiedichte** den Energiegehalt einer Nahrung, zum Beispiel einer Sondennahrung, bezogen auf das Volumen an. Die Energiedichte wird in kcal / mL oder kJ / mL angegeben. Als **Energieprozent** eines Nahrungsbestandteils wird der Anteil des Nahrungsbestandteils am Gesamtenergiegehalt der Nahrung in Prozent bezeichnet. Der Gesamtenergiegehalt beträgt 100%.

Der Begriff "**Gesamtmilchprotein**" bezeichnet die Gesamtheit des in der Milch enthaltenen Proteins. Bei der Milch kann es sich um Kuhmilch handeln. Das Gesamtmilchprotein der Milch kann in einer Zusammensetzung von etwa 80 Gewichtsprozent (% Gew.) Casein und etwa 20% Gew. Molkeproteinen vorliegen. **Casein** bezeichnet denjenigen Proteinanteil der Milch, der bei der Verarbeitung der Milch nicht in die Molke gelangt. Casein stellt eine Mischung aus mehreren Proteinen (unterteilt in die Gruppen αS1-Casein, αS2-Casein, β-Casein und α-Casein) dar, und kann Micellen ausbilden. Man spricht dann auch von "**micellarem Casein**,". **Caseinate** sind Salze des Caseins. Beispiele für Caseinate sind Natrium-Caseinat, Kalium-Caseinat, Magnesium-Caseinat und Calcium-Caseinat. Die übrigen in der Milch vorhandenen Proteine, bei denen es sich nicht um Casein handelt, werden zusammenfassend als **Molkenproteine** bezeichnet.

**Dextrose-Äquivalent** (dextrose equivalent, DE) bezeichnet den prozentualen Anteil reduzierender Zucker an der Trockensubstanz eines Polysaccharid-Gemischs. Das DE entspricht der Menge Glukose, die, bezogen auf 100 g Trockensubstanz des Polysaccharid-Gemischs, das gleiche Reduktionsvermögen hätte. Der mittlere DE Wert ist ein Maß dafür, in wie weit ein Polysaccharidabbau erfolgt ist. Kohlenhydrate mit niedrigem mittlerem DE Wert umfassen also einen hohen Anteil an Polysacchariden und einen niedrigen Gehalt an niedermolekularen Sacchariden, während Kohlenhydrate mit hohem mittlerem DE-Wert hauptsächlich niedermolekulare Saccharide und Zucker umfassen.

**Ballaststoffe** sind Stoffe, die vom menschlichen Körper nicht abgebaut werden. Basierend auf ihrer Löslichkeit in Wasser werden Ballaststoffe in **lösliche Ballaststoffe** und unlösliche **Ballaststoffe** unterteilt. Beispiele für lösliche Ballaststoffe sind Pektin, Inulin, Oligofruciose, Agar-Agar, Chicoree Extrakt, Weizen-Dextrin, Guar und Carrageen. Beispiele für unlösliche Ballaststoffe sind Cellulose, Hemicellulose und Lignin. Als fermentierbare Ballaststoffe werden Ballaststoffe bezeichnet, die von der intestinalen Mikroflora im menschlichen Darm ganz oder teilweise abgebaut werden können. Als nicht-fermentierbare Ballaststoffe werden Ballaststoffe bezeichnet, die von der intestinalen Mikroflora im menschlichen Darm nicht oder kaum abgebaut werden können.

**Mittelkettige Triglyceride** (medium chain triglycerides, MCT) sind Triglyceride, die Fettsäurereste mittlerer Länge (einer Länge von 6 bis 12 C-Atomen) umfassen. Beispiele für Fettsäuren von MCT sind Capronsäure (C6), Caprylsäure (C8), Caprinsäure (C10), und Laurinsäure (C12), oder eine Kombination davon.

**Omega-3-Fettsäuren** sind mehrfach ungesättigte Fettsäuren, bei denen die letzte Doppelbindung der Fettsäure in der Omega-3 Position, also in der von dem Carboxyl-Ende aus gesehen drittletzten C-C-Bindung vorliegt. Die in der erfindugsgemäßen Sondennahrung enthaltenen Omega-3-Fettsäuren können pflanzlichen oder tierischen Ursprungs sein, beispielsweise können die Omega-3-Fettsäuren aus Algen oder aus Fisch gewonnen werden. Besonders bevorzugt sind Omega-3-Fettsäuren, die ausgewählt sind aus der Gruppe bestehend aus Eicosapentaensäure (EPA) und Docosahexaensäure (DHA), oder einer Kombination davon.

**Eicosapentaensäure** (EPA) oder (5Z,8Z,11Z,14Z,17Z)-Eicosa-5,8,11,14,17-pentaensäure ist eine mehrfach ungesättigte Fettsäure aus der Klasse der Omega-3-Fettsäuren mit der Summenformel C₂₀H₃₀O₂.

**Docosahexaensäure** (DHA) oder (42,7Z,10Z,13Z,16Z,19Z)-Docosa-4,7,10,13,16,19-hexaensäure ist eine mehrfach ungesättigte Fettsäure aus der Klasse der Omega-3-Fettsäuren mit der Summenformel C₂₂H₃₂O₂.

Unter **Fischöl** wird aus Fisch gewonnenes Öl verstanden, das Omega-3-Fettsäuren enthält. Das Fischöl kann aus Seefischen, zum Beispiel aus Hochseefischen gewonnen werden.

Die Begriffe **"Flässigkeitsrestriktion"** und **"Volumenrestriktion"** können synonym verwendet werden. Bei Erkrankungen, die zum Beispiel mit Ausscheidungsproblemen der Niere, Ödembildung oder einer beeinträchtigten Pumpleistung des Herzens einhergehen, kann der Patient einer sogenannten Flüssigkeits- oder Volumenrestriktion unterliegen.

Als **"voll bilanziert"** wird eine Sondennahrung bezeichnet, die als alleinige Nahrung geeignet ist, da sie alle wichtigen Nährstoffe (Kohlenhydrate, Fette, Eiweiße, Vitamine, Spurenelemente, Mineralstoffe) und Wasser in geeigneten Mengen enthält. Über eine voll bilanzierte Sondennahrung können die Nährstoffe dem Körper in ausreichender Menge zugeführt werden. Geeignete Mengen der einzelnen Nährstoffe können beispielsweise den Referenzwerten für die Nährstoffzufuhr (D-A-CH Referenzwerte der DGE, ÖGE, SGE/SVE; 1. Auflage, 3. korrigierter Nachdruck 2008) entnommen werden.

Bei einer **gestörten** Glukosetoleranz sind die Blutzuckerwerte eines Patienten gegenüber dem in einem gesunden Vergleichskollektiv ermittelten Durchschnittswert erhöht. Eine gestörte Glukosetoleranz liegt bei einem Nüchtemblutzucker von mehr als 7,0 mmol/l (126 mg/dl) oder bei einem 2 -Stunden-Glukosewert zwischen 7,8 und 11,1 mmol/l (140-200 mg/dl), bestimmt mit einem oralen Glukosetoleranztest vor.

Der **F-Wert** ist die Summe aller bei Erhitzung auf eine Mikroorganismenpopulation ausgeübten letalen Effekte. Der **F₀-Wert** wird auch Letalitätsprodukt oder Letalitätswert genannt. Beispielsweise entspricht ein F₀-Wert von 1 einer Wärmeeinwirkung von 121,1 °C für eine Minute.

Der Begriff **kardiovaskuläre Erkrankungen** umfasst eine Gruppe von Erkrankungen des Gefäßsystems und/oder des Herzens. Beispiele für kardiovaskuläre Erkrankungen sind Herzinsuffizienz, arterielle Hypertonie, periphere arterielle Verschlusskrankheit, koronare Herzkrankheit und Herzinfarkt.

Zu den **neurologischen Erkrankungen** gehören Erkrankungen des zentralen oder peripheren Nervensystems. Beispiele für neurologische Erkrankungen sind Morbus Parkinson, Multiple Sklerose, Schlaganfall und Morbus Alzheimer.

### Zusammensetzung der erfindungsgemäßen enteralen Sondennahrung

Die erfindungsgemäße enterale Sondennahrung ist hochkalorisch und besitzt eine Energiedichte von mindestens 2,0 kcal/mL. Damit wird dem gegenüber Gesunden erhöhten Kalorienbedarf vieler Patientengruppen Rechnung getragen. Zwar nimmt der Kalorienbedarf des gesunden Erwachsenen mit zunehmendem Alter ab, doch besteht auch gerade bei älteren Menschen, d. h. bei Menschen ab dem 65. Lebensjahr, oft ein erhöhter Kalorienbedarf auf Grund von Erkrankungen oder wegen einer Mangel- oder Unterernährung auf Grund verminderter spontaner Nahrungsaufnahme.

Die erfindungsgemäße enterale Sondennahrung hat eine Energiedichte von 2,0 kcal/mL bis 3,5 kcal/mL.

Die Energiedichte einer erfindungsgemäßen enteralen Sondennahrung kann 2,2 kcal/mL bis 3,5 kcal/mL, 2,4 kcal/mL bis 3,5 kcal/mL, 2,6 kcal/mL bis 3,5 kcal/mL, 2,8 kcal/mL bis 3,5 kcal/mL, 3,0 kcal/mL bis 3,5 kcal/mL oder 3,2 kcal/mL bis 3,5 kcal/mL betragen. Die Energiedichte einer erfindungsgemäßen enteralen Sondennahrung kann 2,0 kcal/mL bis 3,2 kcal/mL, 2,0 kcal/mL, bis 3,0 kcal/mL, 2,0 kcal/mL bis 2,8 kcal/mL, 2,0 kcal/mL bis 2,6 kcal/mL, 2,0 kcal/mL bis 2,4 kcal/mL oder 2,0 kcal/mL bis 2,2 kcal/mL betragen.

Bevorzugt ist eine Energiedichte von 2,0 kcal/mL bis 3,0 kcal/mL. Am meisten bevorzugt ist eine Energiedichte von 2,0 kcal/mL bis 2,4 kcal/mL.

So können beispielsweise 2000 kcal bereits mit lediglich einem Liter der erfindungsgemäßen enteralen Sondennahrung einer Energiedichte von etwa 2,0 kcal/mL verabreicht werden. Mit normo- oder niederkalorischen Sondennahrungen werden deutlich höhere Volumina benötigt. Diese überschreiten jedoch oft die bei Patienten mit einer Flüssigkeitsrestriktion festgesetzten täglichen Volumina, die der Patient an Flüssigkeit aufnehmen darf. Daneben bietet die erfindungsgemäße hochkalorische enterale Sondennahrung eine Zeitersparnis bei der Verabreichung im Bolus, die von vielen Patienten als angenehm empfunden wird.

Ein hoher Anteil an Protein in der Sondennahrung ist wünschenswert, da Proteine für eine Vielzahl von Stoffwechselfunktionen benötigt werden. Insbesondere gehen viele Erkrankungen mit einem erhöhten Proteinbedarf einher, und gerade bei Älteren oder bei Patienten mit erhöhtern Kalorienbedarf ist oft auch der Proteinbedarf besonders erhöht.

Die erfindungsgemäße enterale Sondennahrung kann etwa 16 Energieprozent bis etwa 35 Energieprozent aus Protein umfassen, also 16, 17, 18, 19, 20, 21, 22, 23, 24, 25, 26, 27, 28, 29, 30, 31, 32, 33, 34 oder 35 Energieprozent. Bevorzugt ist eine enterale Sondennahrung umfassend 18 bis 33 Energieprozent aus Protein. Eine enterale Sondennahrung umfassend mindestens 20 Energieprozent aus Protein ist besonders bevorzugt. In einer ganz besonders bevorzugten Ausführungsform umfasst die Sondennahrung 20 bis etwa 28 Energieprozent aus Protein.

Neben Proteinen sind in der erfindungsgemäßen enteralen Sondennahrung auch Kohlenhydrate und Fette umfasst.

Die erfindungsgemäße enterale Sondennahrung kann etwa 30 Energieprozent bis etwa 38 Energieprozent aus Kohlenhydraten umfassen. Beispielsweise kann die erfindungsgemäße enterale Sondennahrung 30, 31, 32, 33, 34, 35, 36, 37 oder 38 Energieprozent aus Kohlenhydraten umfassen. Besonders bevorzugt ist eine enterale Sondennahrung, die 32 bis 38 Energieprozent aus Kohlenhydraten umfasst. Am meisten bevorzugt ist eine enterale Sondennahrung umfassend etwa 33 bis etwa 35 Energieprozent aus Kohlenhydraten.

Die erfindungsgemäße enterale Sondennahrung kann etwa 35 bis etwa 55 Energieprozent aus Fetten und/oder Ölen umfassen. Die erfindungsgemäße enterale Sondennahrung kann etwa 35, 36, 37, 38, 39, 40, 41, 42, 43, 44, 45, 46, 47, 48, 49, 50, 51, 52, 53, 54 oder 55 Energieprozent aus Fetten und/oder Ölen umfassen. Eine enterale Sondennahrung, die etwa 37 bis etwa 48 Energieprozent aus Fetten und/oder Ölen umfasst, ist besonders bevorzugt.

Bevorzugt wird also eine enterale Sondennahrung bereitgestellt, die 20 bis etwa 28 Energieprozent aus Protein, etwa 33 bis etwa 35 Energieprozent aus Kohlenhydraten und etwa 37 bis etwa 48 Energieprozent aus Fetten und/oder Ölen umfasst.

Ganz besonders bevorzugt ist eine enterale Sondennahrung, die 20 bis etwa 24 Energieprozent aus Protein, etwa 33 bis etwa 35 Energieprozent aus Kohlenhydraten und etwa 45 Energieprozent aus Fetten und/oder Ölen umfasst.

Eine enterale Sondennahrung mit dieser ganz besonders bevorzugten Energiezusammensetzung ist beispielsweise eine enterale Sondennahrung, die pro 100 mL 10 g bis 12g Protein, 16,5 g bis 17,5 g Kohlenhydrate und 10 g Öle umfasst.

Die erfindungsgemäße enterale Sondennahrung bietet auf Grund ihrer Zusammensetzung eine besonders günstige Verteilung der Anteile von Proteinen, Fetten und Kohlenhydraten an der bereitgestellten Energie. Protein wird in hoher Menge zur Verfügung, gestellt. Dabei bleibt der Anteil der Energie aus Kohlenhydraten vergleichsweise niedrig. Dies ist besonders deshalb vorteilhaft, weil enteral ernährte Patienten auf Grund ihrer Erkrankung oft unter einer gestörten Glukosetoleranz leiden, und somit die Homöostase des Blutzuckerspiegels in enteral ernährten Patienten oft gestört ist. Zudem leiden gerade ältere Menschen und Patienten häufig an Diabetes. Durch die günstige Zusammensetzung der erfindungsgemäßen enteralen Sondennahrung und den niedrigen Anteil an Energie aus Kohlenhydraten eignet sich die erfindungsgemäße enterale Sondennahrung somit besonders auch für die Verabreichung an Patienten mit einer gestörten Glukosetoleranz.

Die erfindungsgemäße enterale Sondennahrung umfasst Proteine, Kohlenhydrate, Öle und/oder Fette, Mineralstoffe und Wasser. Daneben kann die erfindungsgemäße enterale Sondennahrung vorteilhafter Weise weitere Bestandteile umfassen. Weitere Bestandteile können beispielsweise Spurenelemente, Vitamine, Ballaststoffe oder Kombinationen davon sein. Zudem kann die erfindungsgemäße enterale Sondennahrung auch weitere Bestandteile, wie beispielsweise Emulgatoren, Antioxidantien, Aromen und/oder Farbstoffe umfassen. Umfasst die enterale Sondennahrung einen oder mehrere Emulgatoren, so können diese öllöslich sein. Die erfindungsgemäße enterale Sondennahrung kann Omega-3-Fettsäuren, wie EPA und DHA umfassen. Diese können in Form von Fischöl bereitgestellt werden. Ebenso können mittelkettige Triglyceride (MCT) in der erfindungsgemaßen enteralen Sondennahrung enthalten sein.

Ein Hauptbestandteil der erfindungsgemaßen enteralen Sondennahrung .ist Protein. Bei dem Protein kann es sich um eine Kombination von Proteinen handeln. Die erfindungsgemäße enterale Sondennahrung ist proteinreich. Als proteinreich im Sinne der Erfindung wird eine Sondennahrung bezeichnet, deren Proteingehalt mindestens etwa 8,0 g/100 mL aufweist.

Die erfindungsgemäße enterale Sondennahrung umfasst etwa 8,0 g/100 mL bis etwa 14,0 g/100 mL Protein. Die erfindungsgemäße enterale Sondennabrung kann etwa 8,0 g/100 mL bis etwa 13,5 g/100 mL, etwa 8,0 g/100 mL bis etwa 13,0 g/100 mL, etwa 8,0 g/100 mL bis etwa 12,5 g/100 mL, etwa 8,0 g/100 mL bis etwa 12,0 g/100 mL, etwa 8,0 g/100 mL bis etwa 11,5 g/100 mL, etwa 8,0 g/100 mL bis etwa 11,0 g/100 mL, etwa 8,0 g/100 mL bis etwa 10,8 g/100 mL, etwa 8,0 g/100 mL bis etwa 10,6 g/100 mL, etwa 8,0 g/100 mL bis etwa 10,4 g/100 mL, etwa 8,0 g/100 mL bis etwa 10,2 g/100 mL, etwa 8,0 g/100 mL bis etwa 10,0 g/100 mL, etwa 8,0 g/100 mL bis etwa 9,8 g/100 mL, etwa 8,0 g/100 mL bis etwa 9,6 g/100 mL, etwa 8,0 g/100 mL bis etwa 9,4 g/100 mL, etwa 8,0 g/100 mL bis etwa 9,2 g/100 mL, etwa 8,0 g/100 mL bis etwa 9,0 g/100 mL, etwa 8,0 g/100 mL bis etwa 8,8 g/100 mL, etwa 8,0 g/100 mL bis etwa 8,6 g/100 mL, etwa 8,0 g/100 mL bis etwa 8,4 g/100 mL oder etwa 8,0 g/100 mL bis etwa 8,2 g/100 mL Protein umfassen.

Die erfindungsgemäße enterale Sondennahrung kann etwa 8,2 g/100 mL bis etwa 14,0 g/100 mL, etwa 8,4 g/100 mL bis etwa 14 g/100 mL, etwa 8,6 g/100 mL bis etwa 14,0 g/100 mL, etwa 8,8 g/100 mL bis etwa 14,0 g/100 mL, etwa 9,0 g/100 mL bis etwa 14,0 g/100 mL, etwa 9,2 g/100 mL bis etwa 14,0 g/100 mL, etwa 9,4 g/100 mL bis etwa 14,0 g/100 mL, etwa 9,6 g/100 mL bis etwa 14,0 g/100 mL, etwa 9,8 g/100 mL bis etwa 14,0 g/100 mL, etwa 10,0 g/100 mL bis etwa 14,0 g/100 mL, etwa 10,2 g/100 mL, bis etwa 14,0 g/100 mL, etwa 10,4 g/100 mL bis etwa 14,0 g/100 mL, etwa 10,6 g/100 mL bis etwa 14,0 g/100 mL, etwa 10,8 g/100 mL bis etwa 14,0 g/100 mL, etwa 11,0 g/100 mL bis etwa 14,0 g/100 mL, etwa 11,2 g/100 mL bis etwa 14,0 g/100 mL, etwa 11,4 g/100 mL bis etwa 14,0 g/100 mL, etwa 11,6 g/100 mL bis etwa 14,0 g/100 mL, etwa 12,0 g/100 mL bis etwa 14,0 g/100 mL, etwa 12,5 g/100 mL bis etwa 14,0 g/100 mL, etwa 13,0 g/100 mL bis etwa 14,0 g/100 mL oder etwa 13,5 g/100 mL bis etwa 14,0 g/100 mL Protein umfassen.

Bevorzugt umfasst die erfindungsgemäße enterale Sondennahrung etwa 9,0 g/100 mL bis etwa 14,0 g/100 mL Protein. Besonders bevorzugt ist eine enterale Sondennahrung, die etwa 10,0 g/100 mL bis etwa 12,0 g/100 mL Protein umfasst. Am meisten bevorzugt ist eine enterale Sondennahrung, die etwa 10,0 g/100 mL Protein umfasst.

Die erfindungsgemäße enterale Sondennahrung umfasst Gesamtmilchprotein und Caseinat. Besonders bevorzugt ist eine enterale Sondennahrung, die als Proteine Gesamtmilchprotein und Caseinat als alleinige Proteinquellen enthält. Das Caseinat ist Calcium-Caseinat.

Die Erfinder haben festgestellt, dass überraschender Weise solche enteralen Sondennahrungen besonders stabil und lagerfähig sind, die Gesamtmilchprotein und Calcium-Caseinat als Proteinquellen enthalten. In einer ganz besonders bevorzugten Ausführungsform besteht das Protein aus etwa 40 % Gew. Gesamtmilchprotein und etwa 60 % Gew. Caseinat, wobei das Caseinat Calcium-Caseinat sein kann.

Weiter haben die Erfinder gezeigt, dass eine enterale Sondennahrung, die lediglich Gesamtmilchprotein als alleinige Proteinquelle enthält, d.h. deren Protein zu etwa 100 % Gew. aus Gesamtmilchprotein besteht, ebenfalls herstellbar ist. Dies ist überraschend, da im Stand der Technik eine Beimischung von Caseinaten zum Gesamtmilchprotein in der Stabilisierung von proteinreichen hochkalorischen Sondennahrungen als nötig galt. Ein klarer Vorteil der hier zur Verfügung gestellten enteralen Sondennahrung mit Gesamtmilchprotein als der alleinigen Proteinquelle ist, dass die Mineralstoffzusammensetzung dieser enteralen Sondennahrung noch genauer kontrolliert und eingestellt werden kann, da der enteralen Sondenahrung in diesem Fall kein Caseinat zugesetzt wird, und somit die Mineraistoffkomponente des Caseinats in diesem Fall nicht in der enteralen Sondennahrung enthalten ist.

Allerdings können neben Gesamtmilchprotein und Caseinat auch weitere Proteine in der enteralen Sondennahrung enthalten sein, beispielsweise Erbsenprotein und/oder Sojaprotein. Die enteralen Sondennahrung kann etwa 0,1 g/100 mL bis etwa 1,0 g/100 mL Erbsenprotein umfassen, beispielsweise 0,1 g/100 mL bis etwa 0,8 g/100 mL oder 0,5 g/100 mL Erbsenprotein.

Die enteralen Sondennahrung kann etwa 0,1 g/100 mL bis etwa 1,5 g/100 mL Sojaprotein umfassen, beispielsweise 0,1 g/100 mL bis etwa 1,0 g/100 niL oder 0,5 g/100 mL Sojaprotein.

Während das natürliche Gesamtmilchprotein der Milch zu etwa 80% Gew. aus Casein und zu etwa 20% Gew. aus Molkenprotein besteht, kann das Verhältnis von Casein und Molkenprotein im Gesamtmilchprotein durch technische Verfahren, wie beispielsweise Ultrafiltration, verschoben werden. Das bedeutet, dass im Gesamtmilchprotein nicht zwingend etwa 80% Gew. Casein und etwa 20% Gew. Molkenprotein vorliegen müssen. Vielmehr können auch bis zu etwa 99 % Gew. Casein und etwa 1 % Gew. Molkenprotein vorliegen.

Das Gesamtmilchprotein kann also etwa 80 % Gew. bis etwa 99 % Gew. Casein umfassen. Das Gesamtmilchprotein kann etwa 81 % Gew. bis etwa 99 % Gew. Casein, etwa 82 % Gew. bis etwa 99 % Gew. Casein, etwa 83 % Gew. bis etwa 99 % Gew. Casein, etwa 84 % Gew. bis etwa 99 % Gew. Casein, etwa 85 % Gew. bis etwa 99 % Gew. Casein, etwa 86 % Gew. bis etwa 99 % Gew. Casein, etwa 87 % Gew. bis etwa 99 % Gew. Casein, etwa 88 % Gew. bis etwa 99 % Gew. Casein, etwa 89 % Gew. bis etwa 99 % Gew. Casein, etwa 90 % Gew. bis etwa 99 % Gew. Casein, etwa 91 % Gew. bis etwa 99 % Gew. Casein, etwa 92 % Gew. bis etwa 99 % Gew. Casein, etwa 93 % Gew. bis etwa 99 % Gew. Casein, etwa 94 % Gew. bis etwa 99 % Gew. Casein, etwa 95 % Gew. bis etwa 99 % Gew. Casein, etwa 96 % Gew. bis etwa 99 % Gew. Casein, etwa 97 % Gew. bis etwa 99 % Gew. Casein oder etwa 98 % Gew. bis etwa 99 % Gew. Casein umfassen.

Das Gesamtmilchprotein kann etwa 80 % Gew. bis etwa 98 % Gew. Casein, etwa 80 % Gew. bis etwa 97 % Gew. Casein, etwa 80 % Gew. bis etwa 96 % Gew. Casein, etwa 80 % Gew. bis etwa 95 % Gew. Casein, etwa 80 % Gew. bis etwa 94 % Gew. Casein, etwa 80 % Gew. bis etwa 93 % Gew. Casein, etwa 80 % Gew. bis etwa 92 % Gew. Casein, etwa 80 % Gew. bis etwa 91 % Gew. Casein, etwa 80 % Gew. bis etwa 90 % Gew. Casein, etwa 80 % Gew. bis etwa 89 % Gew. Casein, etwa 80 % Gew. bis etwa 88 % Gew. Casein, etwa 80 % Gew. bis etwa 87 % Gew. Casein, etwa 80 % Gew. bis etwa 86 % Gew. Casein, etwa 80 % Gew. bis etwa 85 % Gew. Casein, etwa 80 % Gew. bis etwa 84 % Gew. Casein, etwa 80 % Gew. bis etwa 83 % Gew. Casein, etwa 80 % Gew. bis etwa 82 % Gew. Casein oder etwa 80 % Gew. bis etwa 81 % Gew. Casein umfassen.

Bevorzugt ist ein Gesamtmilchprotein, dass etwa 90 % Gew. bis etwa 94 % Gew. Casein umfasst wobei ein Gesamtmilchprotein, dass etwa 92% Gew. Casein umfasst, besonders bevorzugt ist.

Das Gesamtmilchprotein kann etwa 1 % Gew. bis etwa 20 % Gew. Molkenprotein umfassen. Das Gesamtmilchprotein kann etwa 1 % Gew. bis etwa 19 % Gew. Molkenprotein, etwa 1 % Gew. bis etwa 18 % Gew. Molkenprotein, etwa 1 % Gew. bis etwa 17 % Gew. Molkenprotein, etwa 1 % Gew. bis etwa 16 % Gew. Molkenprotein, etwa 1 % Gew. bis etwa 15 % Gew. Molkenprotein, etwa 1 % Gew. bis etwa 14 % Gew. Molkenprotein, etwa 1 % Gew. bis etwa 13 % Gew. Molkenprotein, etwa 1 % Gew. bis etwa 12 % Gew. Molkenprotein, etwa 1 % Gew. bis etwa 11 % Gew. Molkenprotein, etwa 1 % Gew. bis etwa 10 % Gew. Molkenprotein, etwa 1 % Gew. bis etwa 9 % Gew. Molkenprotein, etwa 1% bis etwa 8 % Gew. Molkenprotein, etwa 1 % Gew. bis etwa 7 % Gew. Molkenprotein, etwa 1 % Gew. bis etwa 6 % Gew. Molkenprotein, etwa 1 % Gew. bis etwa 5 % Gew. Molkenprotein, etwa 1 % Gew. bis etwa 4 % Gew. Molkenprotein, etwa 1 % Gew. bis etwa 3 % Gew. Molkenprotein oder etwa 1 % Gew. bis etwa 2 % Gew. Molkenprotein umfassen.

Das Gesamtmilchprotein kann etwa 2 % Gew. bis etwa 20 % Gew. Molkenprotein, etwa 3 % Gew. bis etwa 20 % Gew. Molkenprotein, etwa 4 % Gew. bis etwa 20 % Gew. Molkenprotein, etwa 5 % Gew. bis etwa 20 % Gew. Mollkenprotein, etwa 6 % Gew. bis etwa 20 % Gew. Molkenprotein, etwa 7 % Gew. bis etwa 20 % Gew. Molkenprotein, etwa 8 % Gew. bis etwa 20 % Gew. Molkenprotein, etwa 9 % Gew. bis etwa 20 % Gew. Molkenprotein, etwa 10 % Gew. bis etwa 20 % Gew. Molkenprotein, etwa 11 % Gew. bis etwa 20 % Gew. Molkenprotein, etwa 12 % Gew. bis etwa 20 % Gew. Molkenprotein, etwa 13 % Gew. bis etwa 20 % Gew. Molkenprotein, etwa 14 % Gew. bis etwa 20 % Gew. Molkenprotein, etwa 15 % Gew. bis etwa 20 % Gew. Molkenprotein, etwa 16 % Gew. bis etwa 20 % Gew. Molkenprotein, etwa 17 % Gew. bis etwa 20 % Gew. Molkenprotein, etwa 18 % Gew. bis etwa 20 % Gew. Molkenprotein oder etwa 19 % Gew. bis etwa 20 % Gew. Molkenprotein umfassen.

Bevorzugt ist ein Gesamtmilchprotein, dass etwa 6 % Gew. bis etwa 10 % Gew. Molkenprotein umfasst, wobei ein Gesamtmilchprotein, dass etwa 8 % Gew. Molkenprotein umfasst, besonders bevorzugt ist.

Ganz besonders bevorzugt ist also ein Gesamtmilchprotein, das etwa 92% Casein und etwa 8 % Molkenprotein umfasst.

Das in einer bevorzugten enteralen Sondennahrung umfasste Protein kann etwa 20 % Gew. bis etwa 70 % Gew. Gesamtmilchprotein umfassen. Der Anteil des Gesamtmilchproteins am in der enteralen Sondennahrung enthaltenen Protein kann etwa 25 % Gew. bis etwa 70 % Gew., etwa 30 % Gew. bis etwa 70 % Gew., etwa 35 % Gew. bis etwa 70 % Gew., etwa 40 % Gew. bis etwa 70 % Gew., etwa 45 % Gew. bis etwa 70 % Gew., etwa 50 % Gew. bis etwa 70 % Gew., etwa 55 % Gew. bis etwa 70 % Gew., etwa 60 % Gew. bis etwa 70 % Gew. oder etwa 65 % Gew. bis etwa 70 % Gew. betragen.

Der Anteil des Gesamtmilchproteins am in der enteralen Sondennahrung enthaltenen Protein kann etwa 20 % Gew. bis etwa 65 % Gew., etwa 20 % Gew. bis etwa 60 % Gew., etwa 20 % Gew. bis etwa 55 % etwa 20 % Gew. bis etwa 50 % Gew., etwa 20 % Gew. bis etwa 45 % Gew., etwa 20 % Gew. bis etwa 40 % Gew., etwa 20 % Gew. bis etwa 35 % Gew., etwa 20 % Gew. bis etwa 30 % Gew. oder etwa 20 % Gew. bis etwa 25 % Gew. betragen. Bevorzugt ist eine enterale Sondennahrung, bei der etwa 30 % Gew. bis etwa 50 % Gew. des Proteins aus Gesamtmilchprotein besteht.

Besonders bevorzugt ist eine enterale Sondennahrung, bei der etwa 35 % Gew. bis etwa 45 % Gew. des Proteins aus Gesamtmilchprotein besteht. Am meisten bevorzugt ist eine enterale Sondennahrung, bei der etwa 40 % Gew. des Proteins aus Gesamtmilchprotein besteht.

Das in der enteralen Sondennahrung enthaltene Protein besteht aus Gesamtmilchprotein und aus Caseinat, wobei das Gesamtmilchprotein einen der vorstehend genannten Anteile an dem in der enteralen Sondennahrung enthaltenen Protein hat und der verbleibende Anteil des Proteins aus Calcium-Caseinat, besteht.

Dies bedeutet, dass zum Beispiel das Gesamtmilchprotein einen Anteil von etwa 20 % Gew. bis etwa 70 % Gew. hat, und der verbleibende Anteil des Proteins aus Caseinat, vorzugsweise aus Calcium-Caseinat, besteht.

So kann beispielsweise das in der enteralen Sondennahrung enthaltene Protein aus 20% Gew. Gesamtmilchprotein und 80 % Gew. Calium-Caseinat. Ebenso kann beispielsweise das in der enteralen Sondennahrung enthaltene Protein aus 70% Gew. Gesamtmilchprotein und 30 % Gew. Calcium-Caseinat Alle weiteren, auf der Grundlage der vorstehend genannten möglichen Anteile von Gesamtmilchprotein an dem in der enteralen Sondennahrung enthaltenen Protein sind umfasst.

In einer bevorzugten Ausführungsform besteht das Protein aus etwa 30 % Gew. bis etwa 50 % Gew. Gesamtmilchprotein und etwa 70 % Gew. bis etwa 50 % Calcium-Caseinat. Ferner bevorzugt ist eine enterale Sondennahrung, deren Protein aus etwa 30 % Gew. Gesamtmilchprotein und etwa 70 % Gew. Caseinat, etwa 31 % Gew. Gesamtmilchprotein und etwa 69 % Gew. Caseinat besteht, etwa 32 % Gew. Gesamtmilchprotein und etwa 68 % Gew. Caseinat, etwa 33 % Gew. Gesamtmilchprotein und etwa 67 % Gew. Caseinat, etwa 34 % Gew. Gesamtmilchprotein und etwa 66 % Gew. Caseinat, etwa 35 % Gew. Gesamtmilchprotein und etwa 65 % Gew. Caseinat, etwa 36 % Gew. Gesamtmilchprotein und etwa 64 % Gew. Caseinat, etwa 37 % Gew. Gesamtmilchprotein und etwa 63 % Gew. Caseinat, etwa 38 % Gew. Gesamtmilchprotein und etwa 62 % Gew. Caseinat, etwa 39 % Gew. Gesamtmilchprotein und etwa 61 % Gew. Caseinat oder etwa 40 % Gew. Gesamtmilchprotein und etwa 60 % Gew. Caseinat besteht, wobei es sich bei dem Caseinat um Calcium-Caseinat handelt.

Am meisten bevorzugt ist eine Ausführungsform, in der das Protein aus etwa 40 % Gesamtmilchprotein und etwa 60 % Calcium-Caseinat besteht, wobei das Gesamtmilchprotein aus 92% Casein und 8% Molkenprotein besteht. In dieser am meisten bevorzugten Ausführungsform besteht also das Protein insgesamt zu 3 % Molkenprotein und zu 97 aus Casein und Calcium-Caseinat. Die Erfinder haben herausgefunden, dass mit der speziellen Proteinzusammensetzung dieser am meisten bevorzugten Ausführungsform der enteralen Sondennahrung eine ganz besonders hohe Stabilität der enteralen Sondennahrung trotz hoher Mineralstoffkonzentrationen erreicht werden kann.

Die erfindungsgemäße enterale Sondennahrung umfasst ferner **Kohlenhydrate**. Die umfassten Kohlenhydrate können als Kombinationen von Kohlenhydraten vorliegen.

Die erfindungsgemäße enterale Sondennahrung kann etwa 14 g/100 mL bis etwa 20 g/100 mL Kohlenhydrate umfassen. Die erfindungsgemäße enterale Sondennahrung kann etwa 14 g/100 mL bis etwa 19 g/100 mL, etwa 14 g/100 mL bis etwa 18 g/100 mL, etwa 14 g/100 mL bis etwa 17 g/100 mL, etwa 14 g/100 mL bis etwa 16 g/100 mL oder etwa 14 g/100 mL bis etwa 15 g/100 mL Kohlenhydrate umfassen. Die erfindungsgemäße enterale Sondennahrung kann etwa 15 g/100 mL bis etwa 20 g/100 mL, etwa 16 g/100 mL bis etwa 20 g/100 mL, etwa 17 g/100 mL bis etwa 20 g/100 mL, etwa 18 g/100 mL bis etwa 20 g/100 mL oder etwa 19 g/100 mL bis etwa 20 g/100 mL Kohlenhydrate umfassen. Bevorzugt umfasst die enterale Sondennahrung 14,5 g/100 mL bis 17,5 g/100 mL Kohlenhydrate, beispielsweise 16,5 g/100 mL.

Es wird also eine hochkalorische enterale Sondennahrung zur Verfügung gestellt, bei der trotz der hohen Energiedichte ein vergleichsweise kleiner Anteil der Energie aus den Kohlenhydraten stammt. Dadurch wird ein rascher Anstieg des Blutzuckerspiegels bei der Verabreichung der Nahrung vermieden. Dies ist allgemein vorteilhaft, da so einer Vielzahl von Stoffwechselstörungen vorgebeugt werden kann. Besonders vorteilhaft wirkt sich der niedrige Kohlenhydratgehalt der erfindungsgemäßen enteralen Sondennahrung beim Vorliegen einer gestörten Glukosetoleranz aus. Ganz besonders vorteilhaft ist der vergleichsweise niedrige Kohlenhydratgehalt bei der Verabreichung im Bolus, da hier eine größere Menge der enteralen Sondennahrung auf einmal verabreicht wird, und es sonst zu einem unerwünschten raschen und besonders starken Anstieg des Blutzuckerspiegels käme.

Ein weiterer vorteilhafter Effekt des vergleichsweise geringen Kohlenhydratgehalts der erfindungsgemäßen enteralen Sondennahrung ist es, dass Viskosität und Osmolarität der enteralen Sondennahrung gunstig beeinflusst werden. Der niedrige Kohlenhydratgehalt der enteralen Sondennahrung trägt zu der niedrigen Viskosität und Osmolarität der enteralen Sondennahrung bei. So wird sichergestellt, dass die Sondennahrung geeignet ist, um über eine Ernährungssonde verabreicht zu werden. Durch die moderate Osmolarität der enteralen Sondennahrung wird dem Auftreten von verabreichungsbedingten Komplikationen, wie beispielsweise dem Auftreten von Diarrhö wirksam vorgebeugt.

Zur Verwendung in der erfindungsgemäßen enteralen Sondennahrung geeignete Kohlenhydrate sind beispielsweise Glukose, Trehalose, Glukosesirup oder Kombinationen davon. Dem Fachmann sind weitere geeignete Kohlenhydrate bekannt.

Zur Verwendung in der erfindungsgemäßen enteralen Sondennahrung geeignete Kohlenhydrate oder Kombinationen von Kohlenhydraten können einen mittleren DE Wert von etwa 20 bis etwa 50 aufweisen. Die in der erfindungsgemäßen enteralen Sondennahrung umfassten Kohlenhydrate können einen mittleren DE Wert von etwa 20 bis etwa 45, etwa 20 bis etwa 40, etwa 20 bis etwa 35, etwa 20 bis etwa 30 oder etwa 20 bis etwa 25 aufweisen.

Die in der erfindungsgemäßen enteralen Sondennahrung umfassten Kohenhydrate können einen mittleren DE Wert von etwa 25 bis etwa 50, etwa 30 bis etwa 50, etwa 35 bis etwa 50, etwa 40 bis etwa 50 oder etwa 45 bis etwa 50 aufweisen. Bevorzugt ist ein mittlerer DE Wert von etwa 22 bis etwa 40, etwa 24 bis etwa 38, etwa 26 bis etwa 36, etwa 28 bis etwa 34 oder etwa 28 bis etwa 32. Ein mittlerer DE Wert von 28, 29, 30 oder 31 ist besonders bevorzugt.

Die erfindungsgemäße enterale Sondennahrung kann zudem weitere Kohlenhydrate, wie Maltodextrin umfassen. Die weiter umfassten Kohlenhydrate können einen mittleren DE Wert haben, der kleiner als 20 ist.

Mono- und Disaccharide, insbesondere Glukose und Saccharose, können eine stabilisierende Wirkung auf hochkalorische und proteinreiche Nährlösungen zeigen. Daher wurden solchen Lösungen im Stand der Technik häufig Glukose, Saccharose und/oder Trehalose als Kohlenhydratquellen zugesetzt.

Jedoch wird Saccharose von einigen Patienten schlecht vertragen. Auch ist aus ernährungsphysiologischer Sicht ein niedriger Gehalt einer Nährlösung an Mono- und Disacchariden zu bevorzugen, da ein hoher Gehalt an Mono- und/oder Disacchariden sich, besonders bei Patienten mit gestörter Glukosetoleranz, ungünstig auswirken kann und die Osmolarität der enteralen Sondennahrung unnötig erhöht.

In einer besonders bevorzugten Ausführungsform wird daher eine erfindungsgemäße enterale Sondennahrung bereitgestellt, die keine Saccharose enthält. In einer ganz besonders bevorzugten Ausführungsform enthält die erfindungsgemäße enterale Sondennahrung als Kohlenhydratquelle Glukosesirup, aber keine zusätzlich zum Glukosesirup separat zugesetzten Mono- oder Disaccharide, d. h. die erfindungsgemäße Sondennahrung enthält nur Mono- und/oder Disaccharide, die in dem Glukosesirup selbst enthalten sind. Diese ganz besonders bevorzugte Ausführungsform der enteralen Sondennahrung weist auch ohne die stabilisierende Wirkung von separat zugesetzten Mono- oder Disacchariden eine ausgezeichnete Stabilität und Lagerfähigkeit auf.

Besonders bevorzugt ist eine enterale Sondennahrung, die 14,5 g/100 mL bis 17,5 g/100 mL Glukosesirup umfasst, wobei der mittlere DE Wert des Glukosesirups 20 bis 35 beträgt. Ganz besonders bevorzugt ist dabei eine enterale Sondennahrung, die 16,5 g/100 mL oder 17,5 g/100mL Glukosesirup mit einem mittleren DE Wert von 28 bis 31 umfasst. Dabei ist es ganz besonders bevorzugt, dass der Glukosesirup mit einem mittleren DE Wert von 28 bis 31 lediglich 2% bis 3%, bevorzugt 2,5%, des Monosaccharids Glukose und lediglich 10% bis 12 %, bevorzugt 11%, des Disaccharids Maltose umfasst.

Die erfindungsgemäße enterbe Sondennahrung kann **Öl** oder Kombinationen von Ölen in einer Gesamtmenge von etwa 7 g / 100 mL bis etwa 12 g / 100 mL umfassen. Verwendet werden können Öle, die zur menschlichen Ernährung geeignet sind. Dem Fachmann sind solche Öle bekannt. Beispiele geeigneter Öle sind Sonnenblumenöl und Rüböl oder eine Kombination davon. Bei der erfindungsgemäßen enteralen Sondennahrung kann es sich um eine Öl in Wasser Emulsion handeln.

Die erfindungsgemäße enterale Sondennahrung kann Fischöl, MCT-Öl oder eine Kombination davon enthalten.

Die erfindungsgemäße enterale Sondennahrung kann Öl oder Kombinationen von Ölen in einer Gesamtmenge von etwa 7 g/100 mL bis etwa 11,5 g/100 mL, von etwa 7 g/100 mL bis etwa 11,0 g/100 mL, von etwa 7 g/100 mL bis etwa 10,5 g/100 mL, von etwa 7 g/100 mL bis etwa 10,0 g/100 mL, von etwa 7 g/100 mL bis etwa 9,5 g/100 mL, von etwa 7 g/100 mL bis etwa 9,0 g/100 mL, von etwa 7 g/100 mL bis etwa 8,5 g/100 mL, von etwa 7 g/100 mL bis etwa 8,0 g/100 mL oder von etwa 7 g/100 mL bis etwa 7,5 g/100 mL umfassen. Die erfindungsgemäße enterale Sondennahrung kann Öl oder Kombinationen von Ölen in einer Gesamtmenge von etwa 7,5 g/100 mL bis etwa 12 g/100 mL, von etwa 8 g/100 mL bis etwa 12 g/100 mL, von etwa 8,5 g/100 mL bis etwa 12 g/100 mL, von etwa 9 g/100 mL bis etwa 12 g/100 mL, von etwa 9,5 g/100 mL bis etwa 12 g/100 mL, von etwa 10 g/100 mL bis etwa 12 g/100 mL, von etwa 10,5 g/100 mL bis etwa 12 g/100 mL, von etwa 11 g/100 mL bis etwa 12 g/100 mL oder von etwa 11,5 g/100 mL bis etwa 12 g/100 mL umfassen. Eine bevorzugte erfindungsgemäße enterale Sondennahrung umfasst Öl in einer Gesamtmenge von etwa 9 g/100 mL bis etwa 11 g/100 mL. Besonders bevorzugt ist eine enterale Sondennahrung, die etwa 9,5 g/100 mL bis etwa 10,5 g/100 mL Öl umfasst. am meisten bevorzugt ist eine enterale Sondennahrung, die etwa 10 g/100 mL Öl umfasst.

In einer ganz besonders bevorzugten Ausführungsform besteht das in der enteralen Sondennahrung enthaltene Öl zu etwa 0,22 g/100 mL aus Fischöl, zu etwa 2,5 g/100 mL aus MCT-Öl, zu etwa 3,0 g/100 mL aus Sonnenblumenöl und zu etwa 4,23 g/100 mL aus Rüböl.

Die erfindungsgemäße enterale Sondennahrung kann Omega-3-Fettsäuren wie EPA und/oder DHA, beispielsweise aus Fischöl, umfassen. Beispielsweise kann die erfindungsgemäße enterale Sondennahrung 0,07 g/100 mL EPA und DHA aus Fischöl umfassen. Das Verhältnis von EPA zu DHA kann 6 : 5 bis zu 4 :1 betragen.

Bei einer enteralen Ernährung im Allgemeinen, besonders aber bei einer längerfristigen und/oder ausschließlichen enteralen Ernährung ist es vorteilhaft, eine Sondennahrung mit einem möglichst bedarfsdeckenden Gehalt an Mineralstoffen bereitzustellen, vor allem wenn die enterale Ernährung beispielsweise über einen Zeitraum von 12 Monaten oder bis zu 24 Monaten erfolgt. Eine enterale Ernährung über einen längeren Zeitraum oder als dauerhafte Ernährungsform können etwa Patienten mit chronischen Erkrankungen erhalten, aber auch ältere Menschen, die zum Beispiel auf Grund von Schwäche oder Schluckbeschwerden nicht mehr in der Lage sind, Nahrung oral aufzunehmen.

Besonders wichtig ist eine Versorgung mit Mineralstoffen über die enterale Nahrung auch bei Patienten, die enteral ernährt werden und einer Flüssigkeits- oder Volumenrestriktion unterliegen, da diese Patienten täglich nur ein geringes, definiertes Volumen an Flüssigkeit aufnehmen dürfen. Bei dieser Personengruppe ist es besonders wichtig, dass die benötigten Mineralstoffe bereits im zur enteralen Ernährung verabreichten Volumen enthalten sind.

Die erfindungsgemäße enterale Sondennahrung umfasst daher ferner mindestens einen **Mineralstoff**, der ausgewählt ist aus der Gruppe bestehend aus Magnesium, Natrium und Chlorid oder einer Kombination davon, wobei, wenn die enterale Sondennahrung Magnesium umfasst, die Konzentration von Magnesium mindestens 20 mg/100 mL beträgt, wenn die enterale Sondennahrung Natrium umfasst, die Konzentration von Natrium mindestens 70 mg/100 mL beträgt und wobei, wenn die enterale Sondennahrung Chlorid umfasst, die Konzentration von Chlorid mindestens 90 mg/100 mL beträgt.

Die enterale Sondennahrung kann etwa 200 mg/L bis etwa 500 mg/L Magnesium umfassen. Die enterale Sondennahrung umfasst bevorzugt etwa 250 mg/L bis etwa 400 mg/L Magnesium. Ganz besonders bevorzugt ist eine enterale Sondennahrung, die etwa 300 mg/L bis etwa 350 mg/L Magnesium umfasst, beispielsweise 310 mg/L, 320 mg/L, 330 mg/L oder 340 mg/L. Am meisten bevorzugt ist eine enterale Sondennahrung, die 300 mg/L Magnesium umfasst.

Die enterale Sondennahrung kann etwa 700 mg/L bis etwa 1300 mg/L Natrium umfassen. Die enterale Sondennahrung umfasst bevorzugt etwa 750 mg/L bis etwa 1200 mg/L Natrium. Besonders bevorzugt ist eine enterale Sondennahrung, die etwa 750 mg/L bis etwa 1000 mg/L Natrium umfasst. Am meisten bevorzugt ist eine enterale Sondennahrung, die etwa 800 mg/L bis etwa 830 mg/L Natrium umfasst, beispielsweise die etwa 810 mg/L oder etwa 820 mg/L Natrium umfasst. Am meisten bevorzugt ist eine enterale Sondennahrung, die 800 mg/L Natrium umfasst

Die enterale Sondennahrung kann etwa 900 mg/L bis etwa 1600 mg/L Chlorid umfassen. Die enterale Sondennahrung umfasst bevorzugt etwa 1000 mg/L bis etwa 1500 mg/L Chlorid. Ganz besonders bevorzugt ist eine enterale Sondennahrung, die etwa 1100 mg/L bis etwa 1400 mg/L Chlorid umfasst. Ebenfalls ganz besonders bevorzugt ist eine enterale Sondennahrung, die etwa 1200 mg/L bis etwa 1300 mg/L Chlorid umfasst, beispielsweise die etwa 1250 mg/L, etwa 1260 mg/L oder etwa 1270 mg/L Chlorid umfasst. Am meisten bevorzugt ist eine enterale Sondennahrung, die 1260 mg/L Chlorid umfasst.

In einer besonders bevorzugten Ausführungsform umfasst die entereale Sondennahrung Natrium und Chlorid in äquimolarer Menge.

Besonders bevorzugt ist eine enterale Sondennahrung, die 20 mg/100 mL bis 50 mg/100 mL Magnesium, 70 mg/100 mL bis 130 mg/100 mL Natrium und 90 mg/100 mL bis 160 mg/100 mL Chlorid umfasst.

Bei der erfindungsgemäßen enteralen Sondennahrung kann es sich um eine voll bilanzierte Sondennahrung handeln.

Die erfindungsgemäße enterale Sondennahrung muss allerdings ihrer Zusammensetzung nach nicht notwendig als voll bilanzierte Sondennahrung vorliegen. Etwaige in der Nahrung nicht oder nicht ausreichend vorhandene Nährstoffe können dann zum Beispiel durch ergänzende orale Nahrungsaufnahrne oder durch die Verabreichung von Mineralstoffen, Spurenelementen und/oder Vitaminen in Form von Nahrungsergänzungsmitteln zugeführt werden.

Jedoch ist eine voll bilanzierte enterale Sondennahrung besonders bevorzugt. Durch diese wird auch eine langfristige ausschließlich enterale Ernährung, also beispielsweise eine ausschließlich enterale Ernährung über einen Zeitraum von 4 Wochen bis zu 12 Monaten, von 4 Wochen bis zu 24 Monaten oder darüber hinaus ermöglicht.

Folglich kann die erfindungsgemäße enterale Sondennahrung weitere Mineralstoffe umfassen.

Die enterale Sondennahrung kann etwa 1500 mg/L bis etwa 2200 mg/L Calcium umfassen. Die enterale Sondennahrung umfasst bevorzugt etwa 1700 mg/L bis etwa 2150 mg/L Calcium. Ganz besonders bevorzugt ist eine enterale Sondennahrung, die eiwa 1900 mg/L bis etwa 2100 mg/L Calcium umfasst. Ebenfalls ganz besonders bevorzugt ist eine enterale Sondennahrung, die etwa 1950 mg/L bis etwa 2050 mg/L Calcium umfasst. Am meisten bevorzugt ist eine enterale Sondennahrung, die etwa 2000 mg/L Calcium umfasst.

Die enterale Sondennahrung kann etwa 1000 mg/L bis etwa 1900 mg/L Kalium umfassen. Die enterale Sondennahrung umfasst bevorzugt etwa 1300 mg/L bis etwa 1800 mg/L oder etwa 1400 mg/L bis etwa 1700 mg/L Kalium. Ganz besonders bevorzugt ist eine enterale Sondennahrung, die etwa 1500 mg/L bis etwa 1700 mg/L Kalium umfasst. Am meisten bevorzugt ist eine enterale Sondennahrung, die etwa 1600 mg/L Kalium umfasst.

Die enterale Sondennahrung kann etwa 900 mg/L bis etwa 1500 mg/L Phosphor umfassen. Die enterale Sondennahrung kann bevorzugt etwa 1000 mg/L bis etwa 1400 mg/L Phosphor umfassen. Ganz besonders bevorzugt ist eine enterale Sondennahrung, die etwa 1150 mg/L bis etwa 1300 mg/L Phosphor umfasst. Ebenfalls ganz besonders bevorzugt ist eine enterale Sondennahrung, die etwa 1200 mg/L bis etwa 1250 mg/L Phosphor umfasst. Am meisten bevorzugt ist eine enterale Sondennahrung, die etwa 1200 mg/L Phosphor umfasst.

Am meisten bevorzugt ist eine enterale Sondennahrung, die 800 mg/L Natrium, 1600 mg/L Kalium, 2000 mg/L Calcium, 300 mg/L Magnesium, 1200 mg/L Phosphor und 1260 mg/L Chlorid umfasst.

Ebenfalls ganz besonders bevorzugt ist es, dass Natrium und Chlorid in der enteralen Sondennahrung in äquimolaren Mengen vorliegen.

Die erfindungsgemäße enterale Sondennahrung kann **Spurenelemente** und **Vitamine** umfassen.

Die erfindungsgemäße enterale Sondennahrung kann **Ballaststoffe** umfassen. Die Ballaststoffe können ausgewählt sein aus der Gruppe bestehend aus löslichen Ballaststoffen und unlöslichen Ballaststoffen oder Kombinationen davon.

Die Ballaststoffe können ausgewählt sein aus der Gruppe bestehend aus Pektin, Inulin, Oligofructose, Agar-Agar, Chicoree Extrakt, Weizen Dextrin, Guar, Carrageen, Cellulose, Hemicellulose, Lignin oder Kombinationen davon.

Bevorzugte Ballaststoffe sind Chicoree-Extrakt, Weizen Dextrin und Cellulose oder Kombinationen davon.

Eine enterale Sondennahrung umfassend die Ballaststoffe Chicoree-Extrakt, Weizen Dextrin und Cellulose ist besonders bevorzugt. Die besonders bevorzugte enterale Sondennahrung kann etwa 8 g/L bis etwa 10 g/L Chicoree-Extrakt, etwa 3 g/L bis etwa 5 g/L Weizen Dextrin und etwa 6 g/L bis etwa 8 g/L Cellulose umfassen. Die besonders bevorzugte enterale Sondennahrung kann etwa 8,5 g/L bis etwa 9,5 g/L Chicoree-Extrakt, etwa 3,5 g/L bis etwa 4,5 g/L Weizen Dextrin und etwa 6,5 g/L bis etwa 7,5 g/L Cellulose umfassen. Die besonders bevorzugte enterale Sondennahrung kann etwa 9 g/L Chicoree-Extrakt, etwa 4 g/L Weizen Dextrin und etwa 7 g/L Cellulose umfassen.

Durch die Verabreichung einer bevorzugten enteralen Sondennahrung, die etwa 9 g/L Chicoree-Extrakt, etwa 4 g/L Weizen Dextrin und etwa 7 g/L Cellulose umfasst, konnte die Darmmotilität der Patienten günstig beeinflusst werden, und dem Auftreten von Diarrhöen wurde vorgebeugt. Besonders in der längerfristigen Verabreichung der erfindungsgemäßen enteralen Sondennahrung hat sich die Verwendung von Ballaststoffen als günstig erwiesen.

### Viskosität

Sondennahrungen weisen eine bestimmte **Viskosität** auf, die von der Art, Menge und/oder Konzentration der zur Herstellung der Sondennahrung verwendeten Ausgangsstoffe beeinflusst werden kann. Auch die Verfahren, die zur Herstellung der Sondennahrung werden, können die Viskosität der Sondennahrung beeinflussen. Besonders bei der Herstellung hochkalorischer und proteinreicher Sondennahrung ist die Viskosität ein kritischer Faktor, da diese im Herstellungsprozess stark ansteigen kann. Geeignete Verfahren zur Bestimmung der Viskosität sind dem Fachmann aus dem Stand der Technik bekannt, und umfassen zum Beispiel die Bestimmung der Viskosität mittels eines Rotationsviskometers oder mittels eines Viskositätsmessbechers. Die Viskosität kann mittels eines Rotationsviskometers bei einer Scherrate von 1 s⁻¹ gemessen werden.

Die enterale Sondennahrung der hier vorliegenden Erfindung weist, gemessen bei einer Scherrate von 1 s⁻¹, eine Viskosität von etwa 50 mPa s bis etwa 180 mPa s bei 20 °C auf. Die erfindungsgemäße enterale Sondennahrung weist bei einer Temperatur von 20 °C und bei einer Scherrate voll 1s⁻¹ eine Viskosität von etwa 50 mPa s bis etwa 160 mPa s, von etwa 50 mPa s bis etwa 140 mPa s, von etwa 50 mPa s bis etwa 120 mPa s, von etwa 50 mPa s bis etwa 100 mPa s, von etwa 50 mPa s bis etwa 80 mPa s

Bevorzugt ist eine enterale Sondennahrung, die bei einer Temperatur von 20 °C und bei einer Scherrate von 1 s⁻¹ eine Viskosität von etwa 50 mPa s bis etwa 180 mPa s, von etwa 60 mPa s bis etwa 170 mPa s, von etwa 70 mPa s bis etwa 160 mPa s oder von etwa 80 mPa s bis etwa 150 mPa s aufweist, bevorzugt wobei die hochkalorische enterale Sondennahrung eine Viskosität von etwa 50 bis etwa 160 mPa s besitzt, am meisten bevorzugt wobei die hochkalorische enterale Sondennahrung eine Viskosität von etwa 60 bis etwa 150 mPa s besitzt.

Die niedrige Viskosität der erfindungsgemäßen enteralen Sondennahrung ist ein entscheidender Vorteil für ihre Verabreichbarkeit über eine Ernährungssonde. Die erfindungsgemäße enterale Sondennahrung mit niedriger Viskosität ist besser zur Verabreichung über eine Ernährungssonde geeignet, da mit zunehmender Viskosität der Sondennahrung die Gefahr, dass die Ernährungssonde durch die Sondennahrung ganz oder teilweise verstopft, zunimmt. Hohe Anforderungen an die Viskosität der Sondennahrung stellen vor allem Ernährungssonden mit geringem Durchmesser und eine Verabreichung über eine Ernährungssonde mittels Schwerkraft. Besonders für diese Anwendungen hat sich die erfindungsgemäße enterale Sondennahrung als vorteilhaft erwiesen.

### Osmolarität

Die **Osmolarität** wird durch die Anzahl der osmotisch aktiven Teilchen pro Liter einer Lösung bestimmt. Die Osmolarität kann in mosmol/L angegeben werden. Verfahren zur Bestimmung der Osmolarität einer Lösung sind dem Fachmann bekannt, beispielsweise kann eine Messung über ein Osmometer erfolgen.

Eine erfindungsgemäße enterale Sondennahrung weist eine Osmolarität von etwa 350 mosmol/L bis etwa 700 mosmol/L auf. Die erfindungsgemäße Sondennahrung kann eine Osmolarität von etwa von etwa 350 mosmol/L bis etwa 650 mosmol/L, von etwa 350 mosmol/L bis etwa 600 mosmol/L, von etwa 350 mosmol/L bis etwa 550 mosmol/L, von etwa 350 mosmol/L bis etwa 500 mosmol/L, von etwa 350 mosmol/L bis etwa 450 mosmol/L, von etwa 350 mosmol/L bis etwa 440 mosmol/L, von etwa 350 mosmol/L bis etwa 420 mosmol/L oder von etwa 350 mosmol/L bis etwa 400 mosmol/L aufweisen. Eine erfindungsgemäße Sondennahrung kann ebenso eine Osmolarität von etwa 400 mosmol/L bis etwa 700 mosmol/L, von etwa 420 mosmol/L bis etwa 700 mosmol/L, von etwa 440 mosmol/L bis etwa 700 mosmol/L, von etwa 450 mosmol/L bis etwa 700 mosmol/L, von etwa 500 mosmol/L bis etwa 700 mosmol/L, von etwa 550 mosmol/L bis etwa 700 mosmol/L, von etwa 600 mosmol/L bis etwa 700 mosmol/L oder von etwa 675 mosmol/L bis etwa 700 mosmol/L aufweisen.

Bevorzugt ist eine enterale Sondennahrung mit einer Osmolarität von etwa 400 mosmol/L bis etwa 500 mosmol/L. Besonders bevorzugt ist eine enterale Sondennahrung mit einer Osmolarität von etwa 420 mosmol/L bis etwa 470 mosmol/L oder einer Osmolarität von etwa 450 mosmol/L bis etwa 500 mosmol/L. Eine enterale Sondennahrung mit einer Osmolarität von etwa 420 mosmol/L bis etwa 440 mosmol/L ist ganz besonders bevorzugt. Ebenso ganz besonders bevorzugt ist eine enterale Sondennahrung mit einer Osmolarität von etwa 430 mosmol/L, etwa 470 mosmol/L oder etwa 500 mosmol/L.

### Vorteile der Erfindung

Die erfindungsgemäße enterale Sondennahrung wie in den Ansprüchen definiert, ermöglicht die enterale Verabreichung der täglich benötigten Menge an Kalorien und Proteinen in einem geringen Flüssigkeitsvolumen, und ermöglicht gleichzeitig eine ausreichende Versorgung mit allen Nährstoffen, Mineralstoffen, Vitaminen und essentiellen Spurenelementen.

Trotz der hohen Nährstoff- und Mineralstoffdichte hat die erfindungsgemäße enterale Sondennahrung dabei eine hervorragende Fließfähigkeit und eine geringe Viskosität, so dass sie zur enteralen Verabreichung über eine Ernährungssonde geeignet ist. Die erfindungsgemäße enterale Sondennahrung weist auf Grund ihrer Zusammensetzung eine hohe Stabilität auf und es kommt nicht zum Verschluss der Ernährungssonde durch Präzipitate.

Das geringe zur bedarfsdeckenden Ernährung benötigte Volumen macht die erfindungsgemäße Sondennahrung besonders geeignet für Patienten, die täglich nur eine bestimmte Menge an Flüssigkeit zu sich nehmen dürfen, da sie auf Grund einer Erkrankung einer Flüssigkeitsrestriktion unterliegen. Erkrankungen, bei denen die Patienten einer Flüssigkeits-oder Volumenrestriktion unterliegen, gehen in der Regel zudem mit einem erhöhten Bedarf an Kalorien und Protein einher, so dass die erfindungsgemäße enterale Sondennahrung ganz besonders für diese Personengruppe geeignet ist.

Die erfindungsgemäße enterale Sondennahrung ist besonders geeignet bei Erkrankungen, bei denen der Patient einer Flüssigkeits- oder Volumenrestriktion unterliegt. Das bedeutet, dass der Patient pro Tag nur eine bestimmte Menge an Flüssigkeit zu sich nehmen darf. Diese Menge ist geringer als die Menge, die für den Patienten ohne das Vorliegen der Erkrankung angemessen oder empfohlen wäre. Beim Gesunden kann pro zugeführte Kalorie ein Bedarf von etwa 1 mL Flüssigkeit, bevorzugt in Form von Wasser, angesetzt werden Die Flüssigkeitszufuhr für gesunde Erwachsene kann pro Tag und kg Körpergewicht 30-35 mL betragen (D-A-CH Referenzwerte der DGE, ÖGE, SGE/SVE; 1. Auflage, 3. korrigierter Nachdruck 2008). Unterliegt ein Patient einer Flüssigkeits- oder Volumenrestriktion, unterschreitet die täglich erlaubte Zufuhr an Flüssigkeit die Empfehlungen für Gesunde.

Erkrankungen, bei denen ein Patient einer Flüssigkeits- oder Volumenrestriktion unterliegt, sind zum Beispiel Erkrankungen, die mit einer verminderten oder fehlenden Ausscheidungsfunktion der Niere einhergehen, wie akute oder chronische Niereninsuffizienz und nephrotisches Syndrom. Weitere Erkrankungen, bei denen ein Patient einer Flüssigkeits- oder Volumenrestriktion unterliegt, sind beispielsweise Herzinsuffizienz, chronisch obstruktive Lungenerkrankung, Leberzirrhose und Aszites, ebenso kardiale, renale oder hepatogene Ödeme. Das Ödem kann ein Lungenödem sein.

Durch die hohe Energiedichte und den hohen Gehalt an Protein ist die erfindungsgemäße enterale Sondennahrung ebenfalls besonders zur enteralen Ernährung von Patienten geeignet, bei denen, beispielsweise auf Grund von Trauma, Verbrennung, einer Kachexie oder einer Proteinmangelerkrankung, ein erhöhter Bedarf an Kalorien und/oder Protein besteht.

Der Kalorienbedarf von Gesunden richtet sich nach Alter, Geschlecht, Körpergewicht und Aktivität einer Person. Angaben über den Kalorienbedarf von Gesunden sind im Stand der Technik verfügbar (siehe zum Beispiel D-A-CH Referenzwerte der DGE, ÖGE, SGE/SVE; 1. Auflage, 3, korrigierter Nachdruck 2008).

Zwar nimmt der Kalorienbedarf des gesunden Erwachsenen mit zunehmendem Alter ab, doch besteht auch gerade bei älteren Menschen oft ein erhöhter Kalorienbedarf auf Grund von Erkrankungen oder wegen einer Mangel- oder Unterernährung auf Grund verminderter spontaner Nahrungsaufnahme.

Ein im Vergleich zu Gesunden gleichen Alters und Geschlechts erhöhter Kalorienbedarf kann beispielsweise bei schweren Erkrankungen, wie onkologischen Erkrankungen (Krebs), schwerer und/oder lang anhaltender Infektion (beispielsweise viraler oder bakterieller Infektion), bei Traumata (beispielsweise auf Grund von Verletzungen oder Verbrennungen), bei Knochenbrüchen, Peritonitis, Sepsis, Verbrennungen oder Mukoviszidose vorliegen.

Der Proteinbedarf des gesunden Erwachsenen beträgt etwa 0,8 g/kg Körpergewicht (KG) und Tag (D-A-CH Referenzwerte der DGE, ÖGE, SGE/SVE; 1. Auflage, 3. korrigierter Nachdruck 2008). Ein erhöhter Proteinbedarf kann bei gesunden älteren Menschen (> 70 Jahre) vorliegen. In dieser Personengruppe kann der Proteinbedarf auf etwa 0,9 g/kg KG bis 1,1 g/kg KG und Tag ansteigen. Bei klinisch ernährten, d. h. parenteral oder enteral ernährten Personen steigt der tägliche Proteinbedarf auf 1,0 g/kg KG bis 1,5 g/kg KG. Der tägliche Proteinbedarf ist besonders erhöht beim Vorliegen bestimmter Erkrankungen, wie Lebererkrankungen (beispielsweise alkoholische Steatohepatitis, Leberzirrhose, chirurgischen Eingriffen an der Leber oder Lebertransplantation), bei akuter oder chronischer Niereninsuffizienz mit Nierenersatztherapie (beispielsweise in Form von Peritonaldialyse oder Hämodialyse), beim nephrotischen Syndrom, starken oder lang andauernden Infekten, Verbrennungen und Dekubitus. Beim Vorliegen einer oder mehrerer der vorstehend genannten Erkrankungen kann der tägliche Proteinbedarf etwa 1,2 g/kg KG bis etwa 1,5 g,/kg KG betragen. Auch bei onkologischen Erkrankungen steigt der Proteinbedarf, auf etwa 1,2 g/kg KG bis etwa 2,0 g/kg KG und Tag.

In vorteilhafter Weise kann die erfindungsgemäße enterale Sondennahrung an Patienten verabreicht werden, deren Protein und/oder Kalorienbedarf auf Grund einer Erkrankung erhöht ist. Dies ist beim Vorliegen einer oder mehrer der vorstehend genannten Erkrankungen der Fall, besonders aber bei chronisch kranken, katabolen Patienten.

Ganz besonders geeignet ist hier die erfindungsgemäße enterale Sondennahrung mit mindestens 2,0 kcal/ml, die pro 100 mL etwa 8,0 g bis etwa 14,0 g Protein, 70 mg bis 130 mg Natrium, 100 mg bis 190 mg Kalium, 150 mg bis 220 mg Calcium, 20 mg bis 50 mg Magnesium, 90 mg bis 150 mg Phosphor und 90 mg bis 160 mg Chlorid umfasst, zur Verabreichung an Patienten, bei denen sowohl ein erhöhten Bedarf an Kalorien und/oder Protein als auch eine Flüssigkeitsrestriktion vorliegen. Es hat sich gezeigt, dass besonders Patienten, die einer Flüssigkeitsrestriktion unterliegen, von der Verabreichung der erfindungsgemäßen enteralen Sondennahrung profitieren, dies gilt in besonderem Maß für Patienten mit Flüssigkeitsrestriktion und hohem Kalorien- und/oder Proteinbedarf.

Die erfindungsgemäße enterale Sondennahrung, beispielsweise in der Zusammensetzung der Sondennahrungen R, O, L und C, C' sowie C" (jeweils wie in Beispiel 2 hergestellt), hat sich als besonders vorteilhaft erwiesen bei Patienten mit kardiovaskulärer Erkrankung, chronisch obstruktiver Lungenerkrankung, kardialem, renalem oder hepatogenem Ödem, Lungenödem, Erkrankung der Leber, Aszites, Nierenerkrankungen, neurologischen Erkrankungen und Krebserkrankungen, schweren und/oder lang anhaltenden Infektionen, Traumata, Peritonitis, Sepsis, Verbrennungen, Dekubitus oder Mukoviszidose.

Die **Erkrankung der Leber** kann ausgewählt sein aus der Gruppe bestehend aus chronischer Hepatitis, alkoholischer Steatohepatitis, Leberzirrhose, chirurgischem Eingriff an der Leber, Lebertransplantation, hepatozellulärem Karzinom oder Kombinationen davon.

Die **starke oder lang andauernde Infektion** kann ausgewählt sein aus der Gruppe bestehend aus: Infektion mit Tuberkulose, humanem Immundefizienz-Virus (HIV) oder Hepatitis-Virus. Das Hepatitis-Virus kann ausgewählt sein aus der Gruppe bestehend aus Hepatitis-B, Hepatitis-C und Hepatitis-D.

Die **Nierenerkrankung** kann ausgewählt sein aus der Gruppe bestehend aus akuter oder chronischer Niereninsuffizienz mit Nierenersatztherapie und nephrotischem Syndrom. Unter dem Begriff **Nierenersatztherapie** werden Behandlungsmöglichkeiten zusammengefasst, die bei weitgehendem oder vollständigem Nierenversagen die ausfallenden Funktionen der Nieren übernehmen. Hierzu gehören Hämodialyse, Peritonealdialyse und Nierentransplantation.

Die erfindungsgemäße enterale Sondennahrung ist geeignet für Patienten mit einer **Krebserkrankung**. Die Krebserkrankung kann ausgewählt sein aus der Gruppe bestehend aus kolorektales Karzinom, Mammakarzinom, Pankreaskarzinom, Leberkarzinom, Lungenkarzinom, Magenkarzinom, Ösophaguskarzinom, Kopf-Hals Tumoren, Kehkopfkarzinom, Hirntumoren, Ovarialkarzinom, Zervixkarzinom, Endometriumkarzinom, Hodenkrebs, Tumoren der Niere und der ableitenden Harnwege, Gallengangskarzinome, Blasenkarzinome, Knochenkrebs und Krebserkrankungen des Nervensystems, Angiome und Sarkome, wie das Kaposi-Sarkom, sowie Hautkrebs. Umfasst sind auch Absiedlungen des Tumors in andere Organe, sogenannte Metastasen. Ferner ist die erfindungsgemäße enterale Sondennahrung geeignet für Patienten mit einer Krebserkrankung des blutbildenden Systems, wie Leukämien, umfassend akute myeloische Leukämie (AML, auch als akute nicht-lymphatische Leukämie (ANLL) bezeichnet), chronische myeloische Leukämie (CML), akute lymphatische Leukämie (ALL), chronische lymphatische Leukämie (CLL) und Lymphome, umfassend Hodgkin-Lymphome und Non-Hodgkin-Lymphome.

Die erfindungsgemäße enterale Sondennahrung ermöglicht zudem nun in vorteilhafter Weise eine rein enterale Ernährung von Patienten, bei denen auf Grund des erhöhten Bedarfs an Kalorien und/oder Protein sonst eine ergänzende parenterale Ernährung nötig gewesen wäre. Dies ermöglicht die Vermeidung der mit der parenteralen Ernährung einhergehenden Risiken, wie etwa Infektion durch die Applikation über die Blutbahn oder eine Entgleisung des Blutzuckerspiegels.

Wie sich gezeigt hat, wirkt sich in dieser Hinsicht auch der vergleichsweise geringe Koblenhydratgehalt der erfindungsgemäßen enteralen Sondennahrung vorteilhaft aus, da so ein starker Anstieg des Blutzuckers nach der Verabreichung vermieden wird. Die erfindungsgemäße Sondennahrung ist also auch für Patienten mit gestörter Glukosetoleranz gut geeignet, sofern diese auf Grund einer weiteren Erkrankung oder auf Grund ihres Alters eine hochkalorische und proteinreiche enterale Sondennahrung benötigen.

Durch die konzentrierte Darreichungsform kann der erhöhte Bedarf an Kalorien und/oder Protein den Patienten in einem für den Patienten akzeptablen Flüssigkeitsvolumen zugeführt werden.

In besonders vorteilhafter Weise ermöglicht die erfindungsgemäße enterale Sondennahrung erstmals die enterale Verabreichung einer zugleich hochkalorischen und proteinreichen Nahrung in einem kleinen Flüssigkeitsvolumen. Darüber hinaus bietet die erfindungsgemäße enterale Sondennahrung zudem den Vorteil, dass die enterale Sondennahrung als voll bilanzierte enterale Sondennahrung hergestellt werden kann, d.h. die erfindungsgemäße enterale Sondennahrung kann ohne zeitliche Begrenzung als alleinige Nahrung verabreicht werden.

Ein weiterer Vorteil der erfindungsgemäßen enteralen Sondennahrung ist in der Zeitersparnis bei der Verabreichung im Bolus zu sehen. Da die enterale Sondennahrung sowohl protein- als auch kalorienreich ist, kann der Protein- und Kalorienbedarf mit einem geringeren Flüssigkeitsvolumen gedeckt werden, was eine bedarfsdeckende Verabreichung in vergleichsweise kurzer Zeit ermöglicht. Dies ist besonders bei onkologischen Patienten vorteilhaft, die bereits aufwendige und zeitintensive chemotherapeutische Behandlungen erhalten, da nun zumindest die Verabreichungsdauer der Nahrung vermindert werden kann.

Die erfindungsgemäße enterale Sondennahrung kann zur Vorbeugung eines Proteinmangels und/oder zur Behandlung eines bereits bestehenden Proteinmangels bei enteral ernährten Patienten verwendet werden.

Beim Vorliegen eines **Proteinmangels** kommt es zu einer Abnahme der Serumproteine, besonders der Albuminfraktion, gegenüber den Normwerten. Das Vorliegen eines Proteinmangels kann also beispielsweise durch Untersuchung der Serumproteine in einer Blutprobe eines Patienten bestimmt werden.

Die erfindungsgemäße enterale Sondennahrung ist daher besonders zur Vorbeugung einer Kachexie und/oder zur Behandlung einer bereits bestehenden Kachexie bei enteral ernährten Patienten geeignet.

Unter **Kachexie** wird eine schwere Form der Abmagerung mit allgemeiner Atrophie verstanden. Allgemeine Atrophie bezeichnet die metabolisch bedingte Rückbildung von Organen und/oder Geweben. Kachexie kann bei schweren chronischen Erkrankungen, beispielsweise bei Krebserkrankungen oder bei Infektionskrankheiten wie AIDS (acquired immunodeficiency syndrome) in Folge einer HIV Infektion auftreten. Kachexie kann auch bei Patienten mit Herzinsuffizienz auftreten.

Besonders geeignet ist die erfindungsgemäße enterale Sondennahrung zur Vorbeugung und/oder Behandlung eines bereits bestehenden Protein-Energie Mangelsyndroms.

Ein **Protein-Energie Mangelsyndrom** kann bei unzureichender Versorgung mit Protein und unzureichender Gesamtenergiezufuhr über die Nahrung über einen längeren Zeitraum auftreten. Erkrankungen, die in einem Protein-Energie Mangelsyndrom resultieren können, sind beispielsweise Wundheilungsstörungen (beispielsweise Dekubitus), Verletzungen, Traumata oder Krebs sowie Verbrennungen.

### Verabreichungsformen

Die **Verabreichung** der enteralen Sondennahrung erfolgt enteral über eine Ernährungssonde, **kontinuierlich** oder **im Bolus**. Sowohl die kontinuierliche Verabreichung als auch die Verabreichung im Bolus kann **durch Schwerkraft** oder **mit Hilfe einer Pumpe** erfolgen. Bei der Verabreichung durch Schwerkraft wird die pro Stunde verabreichte Menge an Sondennahrung unter anderem durch den Innendurchmesser der Sonde bestimmt. Erfolgt die Verabreichung mittels einer Pumpe, kann über diese die pro Stunde verabreichte Menge an enteraler Sondennahrung bestimmt werden.

Als **kontinuierliche Verabreichung** wird eine Verabreichung bezeichnet, bei der ohne Unterbrechung über einen bestimmten Zeitraum Sondennahrung durch die Ernährungssonde zugeführt wird. Bei der kontinuierlichen Verabreichung kann die Verabreichung zum Beispiel mit 20 mL/Stunde bis 150 mL/Stunde Sondennahrung erfolgen.

Eine kontinuierliche Verabreichung kann beispielsweise ohne Unterbrechung über einen Zeitraum von 1 Stunde, 2 Stunden, 3 Stunden, 4 Stunden, 5 Stunden, 6 Stunden, 7 Stunden, 8 Stunden, 9 Stunden, 10 Stunden, 11 Stunden, 12 Stunden, 13 Stunden, 14 Stunden, 15 Stunden, 16 Stunden, 17 Stunden, 18 Stunden, 19 Stunden, 20 Stunden, 21 Stunden, 22 Stunden, 23 Stunden oder 24 Stunden erfolgen. Ebenso kann eine kontinuierliche Verabreichung beispielsweise ohne Unterbrechung über einen Zeitraum von 1 Stunde bis 96 Stunden, 1 Stunde bis 72 Stunden, 1 Stunde bis 48 Stunden oder 1 Stunde bis 24 Stunden erfolgen. Die kontinuierliche Verabreichung kann auch über andere Zeiträume, zum Beispiel für 1. Tag bis 4 Tage, für 1 Woche, für 2 Wochen, für 3 Wochen, für 4 Wochen, aber auch über längere Zeiträume von bis zu 12 Monaten erfolgen.

Insbesondere hat sich aber gezeigt, dass die erfindungsgemäße enterale Sondennahrung auch längerfristig, also zwischen 4 Wochen und 12 Monaten als voll bilanzierte Nahrung zur alleinigen Ernährung von älteren Menschen oder Patienten einsetzbar ist. Durch die vorteilhafte Mineralstoffzusammensetzung der erfindungsgemäßen Sondennahrung konnte dabei dem Auftreten von Mangelerscheinungen wirksam vorgebeugt werden, und Nebenwirkungen wie Diarrhö oder Erbrechen wurden nicht beobachtet.

Als Verabreichung **im Bolus** wird eine portionsweise Verabreichung bezeichnet. Die Verabreichung im Bolus wird auch als Verabreichung in Intervallen bezeichnet. Das bedeutet, dass bei der Verabreichung im Bolus beispielsweise eine Portion von 50 mL bis 250 mL Sondennahrung verabreicht wird. Nach der Verabreichung der Portion erfolgt für einen bestimmten Zeitraum, beispielsweise für 3 Stunden, 5 Stunden, 10 Stunden oder 12 Stunden keine weitere Verabreichung. Anschließend wird erneut Sondennahrung verabreicht.

Bei der Verabreichung im Bolus führt die erfindungsgemäße enterale Sodennahrung durch das geringere zu verabreichende Volumen zu einer Zeitersparnis gegenüber normo- oder niederkalorischen Sondennahrungen.

Bereitgestellt wird auch ein Verfahren zur enteralen Ernährung einer älteren Person oder eines Patienten, die/der einer solchen Ernährung bedarf, das Verfahren umfassend die enterale Verabreichung der erfindungsgemäßen enteralen Sondennahrung an die Person oder den Patienten.

### Herstellungsverfahren

Um eine lagerfähige enterale Sondennahrung zu erhalten, und insbesondere für eine sichere Verabreichung der enteralen Sondennahrung ist es unerlässlich, dass in der Sondennahrung kein mikrobielles Wachstum auftritt. Produkte aus dem Bereich enterale Nahrung müssen über einen langen Zeitraum haltbar sein (mindestens für 12-15 Monate, bei Raumtemperatur gelagert). Daher müssen die Produkte durch Sterilisation mittels einer entsprechenden Hitzebehandlung haltbar gemacht werden. Im Stand der Technik werden enterale Sondennahrungen im Allgemeinen ultrahocherhitzt (UHT; "Ultra High Temperature"). Das bedeutet, eine hohe Temperatur wirkt für eine kurze Zeit auf die Sondennahrung ein.

Mit steigendem Gehalt an Proteinen in der enteralen Sondennahrung kommt es allerdings bei der UHT-Behandlung zu einer Zunahme der Viskosität der Sondennahrung bei der Erhitzung. Die Viskosität kann so weit ansteigen, dass eine Verabreichung der Sondennahrung über eine Ernährungssonde nicht mehr möglich ist, da diese ganz oder teilweise verstopfen würde.

Auch ist eine Beimischung von Mineralstoffen, besonders von Magnesium, zu enteralen Sondennahrungen kritisch, insbesondere wenn diese hochkalorisch sind und einen hohen Proteingehalt besitzen. In den bisherigen, aus dem Stand der Technik bekannten Verfahren zur Herstellung hochkalorischer enteraler Sondennahrungen mit vergleichsweise hohem Proteingehalt waren die Mengen an Mineralstoffen, wie Magnesium, Natrium, Chlorid, aber auch an Calcium, die der Sondennahrung beigemischt werden konnten, durch die Stabilität der Sondennahrung sehr begrenzt. Dies ist unter anderem dadurch zu erklären, dass Mineralstoffe, insbesondere zweiwertige Ionen wie Magnesium- oder Calciumionen zur (meist hitzeinduzierten) Präzipitat- und Aggregatbildung von Proteinen führen können.

Sowohl der Protein- als auch der Mineralstoffgehalt sind also kritische Parameter in der Herstellung einer enteralen Sondennahrung, da mit steigendem Protein- und Mineralstoffgehalt auch die Viskosität der Sondennahrung üblicherweise ansteigt, so dass eine enterale Verabreichung unter Umständen nicht mehr möglich ist.

Bereitgestellt wird nun ein Verfahren, das es überraschend ermöglicht, eine besonders stabile hochkalorische enterale Sondennahrung herzustellen, die proteinreich ist und zudem einen hohen Gehalt an mindestens einem der Mineralstoffe Magnesium, Natrium oder Chlorid aufweist. Durch das erfindungsgemäße Verfahren kann nun mindestens einer der Mineralstoffe Magnesium, Natrium oder Chlorid in einer hohen Konzentration (mindestens 20 mg/100 mL Magnesium, mindestens 70 mg/100 mL Natrium oder mindestens 90 mg/100 mL Chlorid) in der enteralen Sondennahrung bereitgestellt werden, ohne dass die Viskosität der Sondennahrung so stark ansteigt, dass eine Verabreichung über eine Ernährungssonde nicht mehr möglich ist. Das Verfahren zeichnet sich dadurch aus, dass es die Herstellung einer enteralen Sondennahrung ermöglicht, die für eine hochkalorische und proteinreiche Sondennahrung eine vergleichsweise niedrige Viskosität von etwa 50 mPa s bis etwa 180 mPa s aufweist, bevorzugt eine Viskosität von 60 mPa s - 150 mPa s, gemessen bei einer Temperatur von 20 °C und bei einer Scherrate von 1 s⁻¹.

Das erfindungsgemäße Verfahren umfasst die folgenden Schritte:
a) Mischen der in der hochkalorischen enteralen Sondennahrung enthaltenen Bestandteile; und
b) Erhitzen der in Schritt a) erhaltenen Mischung auf 120 °C bis 145 °C,
wobei das Erhitzen in Schritt b) erfolgt, bis ein F₀-Wert von 6 bis 15 erreicht ist.

In einer bevorzugten Ausführungsform des Verfahrens umfasst die hochkalorische enterale Sondennahrung Gesamtmilchprotein umfassend etwa 90% Gew. bis etwa 99% Gew. Casein und etwa 1% Gew. bis etwa 10% Gew. Molkenprotein. Dabei ist es besonders bevorzugt, dass das Gesamtmilchprotein etwa 92% Gew. Casein und etwa 8% Gew. Molkenprotein umfasst. In dieser bevorzugten Ausführungsform kann das Erhitzen in Schritt b) auf 120 °C bis 145 °C, bevorzugt auf 136 °C bis 145 °C, besonders bevorzugt auf 138 °C bis 143 °C, am meisten bevorzugt auf 139 °C bis 142 °C erfolgen. Stattdessen kann in dieser bevorzugten Ausführungsform das Erhitzen in Schritt b) auch auf 120 °C bis 130 °C, bevorzugt auf 126 °C bis 129 °C, besonders bevorzugt auf 127 °C bis 128 °C erfolgen.

In einer weiteren, besonders bevorzugten Ausführungsform des Verfahrens umfasst die hochkalorische enterale Sondennahrung Gesamtmilchprotein umfassend etwa 80% Gew. Casein und etwa 20% Gew. Molkenprotein. In dieser weiteren, besonders bevorzugten Ausführungsform erfolgt das Erhitzen in Schritt b) auf 120 °C bis 130 °C, bevorzugt auf 126 °C bis 129 °C, besonders bevorzugt auf 127 °C bis 128 °C.

Das Erhitzen in Schritt b) dient der Sterilisierung. Die Sterilisierungstemperaturen und die Erhitzungszeiten werden innerhalb der vorstehend angegebenen Temperaturbereiche so gewählt, dass ein F₀-Wert von 6 bis 15 erreicht wird. Dem Fachmann sind die zur Erreichung eines F₀-Werts von 6 bis 15 bei einer bestimmten Temperatur benötigten Erhitzungszeiten bekannt. In der nachfolgenden Tabelle werden die zum Erreichen eines bestimmten F₀ Wertes bei einer bestimmten Temperatur benötigten Zeiten angegeben:

| Temperatur [°C] | Erhitzungszeit [s] | | | | | | | | | |
|---|---|---|---|---|---|---|---|---|---|---|
| | F₀=6 | F₀=7 | F₀=8 | F₀=9 | F₀=10 | F₀=11 | P₀=12 | F₀=13 | F₀=14 | F₀=15 |
| 120 | 465 | 542 | 620 | 697 | 775 | 852 | 930 | 1007 | 1085 | 1162 |
| 122 | 293 | 342 | 391 | 440 | 489 | 538 | 587 | 636 | 685 | 733 |
| 124 | 185 | 216 | 247 | 278 | 308 | 339 | 370 | 401 | 432 | 463 |
| 126 | 117 | 136 | 156 | 175 | 195 | 214 | 234 | 253 | 273 | 292 |
| 128 | 74 | 86 | 98 | 111 | 123 | 135 | 147 | 160 | 172 | 184 |
| 130 | 46 | 54 | 62 | 70 | 77 | 85 | 93 | 101 | 108 | 116 |
| 132 | 29 | 34 | 39 | 44 | 49 | 54 | 59 | 64 | 68 | 73 |
| 134 | 19 | 22 | 25 | 28 | 31 | 34 | 37 | 40 | 43 | 46 |
| 136 | 12 | 14 | 16 | 18 | 19 | 21 | 23 | 25 | 27 | 29 |
| 138 | 7 | 9 | 10 | 11 | 12 | 14 | 15 | 16 | 17 | 18 |
| 140 | 4,6 | 5,4 | 6,2 | 7,0 | 7,7 | 8,5 | 9,3 | 10,1 | 10,8 | 11,6 |
| 142 | 2,9 | 3,4 | 3.9 | 4,4 | 4,9 | 5,4 | 5,9 | 6,4 | 6.8 | 7,3 |
| 144 | 1,9 | 2,2 | 2,5 | 2.8 | 3,1 | 3,4 | 3,7 | 4,0 | 4,3 | 4,6 |
| 145 | 1,5 | 1,7 | 2,0 | 2,2 | 2,5 | 2,7 | 2,9 | 3,2 | 3,4 | 3,7 |

Die anschließende Abfüllung des Produkts, beispielsweise in geeignete Kunststoffbeutel, Kunststoffflaschen oder Glasflaschen, kann sowohl aseptisch (steril) als auch unsteril erfolgen.

Ist die Abfüllung unsteril erfolgt, wird eine Nachsterilisation durchgeführt. Die Nachsterilisation dient der Inaktivierung beziehungsweise der Abtötung einer möglicherweise durch den unsterilen Abfüllvorgang aufgetretenen Neukontamination des Produkts. Die Nachsterilisation erfolgt bei 110-121 °C, so .lange, bis ein F₀-Wert von 1 bis 5 erreicht wird.

| Temperatur [°C] | Erhitzungszeit [s] | | | | |
|---|---|---|---|---|---|
| | F₀=1 | F₀=2 | F₀=3 | F₀=4 | F₀=5 |
| 110 | 775 | 1550 | 2326 | 3101 | 3876 |
| 111 | 615 | 1231 | 1846 | 2462 | 3077 |
| 112 | 489 | 978 | 1467 | 1956 | 2445 |
| 113 | 388 | 777 | 1165 | 1553 | 1942 |
| 114 | 308 | 617 | 925 | 1234 | 1542 |
| 115 | 245 | 490 | 735 | 980 | 1225 |
| 116 | 195 | 389 | 584 | 779 | 973 |
| 117 | 155 | 309 | 464 | 618 | 773 |
| 118 | 123 | 246 | 368 | 491 | 614 |
| 119 | 98 | 195 | 293 | 390 | 488 |
| 120 | 77 | 155 | 232 | 310 | 387 |
| 121 | 62 | 123 | 185 | 246 | 308 |

Die Erfinder konnten zeigen, dass die mit dem erfindungsgemäßen Verfahren erhaltene enterale Sondennahrung besonders stabil und von vorteilhafter niedriger Viskosität war, wenn als Proteinquelle eine Mischung aus Gesamtmilchprotein und Calcium-Caseinat eingesetzt wurde. Die durch das erfindungsgemäße Verfahren erhaltene enterale Sondennahrung zeichnete sich besonders dadurch aus, dass es über den gesamten Zeitraum der Lagerung weder zur Bildung von Sediment noch zur Bildung von Präzipitaten oder zur Phasentrennung in der enteralen Sondennahrung kam. Als ganz besonders geeignet zur Verwendung in dem erfindungsgemäßen Verfahren hat sich als Protein eine Mischung aus Gesamtmilchprotein und Calcium-Caseinat im Verhältnis von 40 % Gew. zu 60 % Gew. erwiesen.

Das Verfahren ermöglicht auch die Herstellung einer enteralen Sondennahrung mit einem niedrigen Gehalt an Kohlenhydraten, beispielsweise die Bereitstellung einer enteralen Sondennahrung, bei der lediglich etwa 32 bis 38 Energieprozent aus Kohlenhydraten stammen. Durch das Verfahren ist es nun zudem überraschend möglich, eine enterale Sondennahrung bereitzustellen, die keine Saccharose enthält. Es ist nun sogar möglich, eine enterale Sondennahrung bereitzustellen, die weder Saccharose noch separat zugesetzte Mono- und/oder Disaccharide als Stabilisator enthält.

Zudem ist die Osmolarität der mit dem erfindungsgemäßen Verfahren herstellbaren enteralen Sondennahrung auf Grund des geringen Kohlenhydratgehalts akzeptabel, und eine enterale Verabreichung führt nicht zum Auftreten von Diarrhö. Mit der erfindungsgemäßen Sondennahrung kann eine bedarfsdeckende Versorgung mit Mineralstoffen insbesondere mit Magnesium, Natrium und Chlorid, aber auch mit Calcium, Phosphat und Kalium durch die enterale Ernährung gewährleistet werden.

Das Verfahren ermöglicht darüber hinaus, eine besonders stabile enterale Sondennahrung bereitzustellen. Die enterale Sondennahrung zeichnet sich durch eine hervorragende Lagerfähigkeit, galenische Stabilität und mikrobielle Sicherheit aus. Auch bei längeren Lagerzeiten von 12-15 Monaten kommt es in der enteralen Sondennahrung nicht zu Entmischungen oder Ausflockungen.

### Bevorzugte Ausführungsformen der erfindungsgemäßen enteralen Sondennahrung:

In einer bevorzugten Ausführungsform hat die hochkalorische enterale Sondennahrung einen Energiegehalt von 2,0 kcal bis 3,5 kcal pro mL, bevorzugt 2,0 kcal bis 3,0 kcal pro mL und am meisten bevorzugt 2,0 kcal bis 2,4 kcal pro mL und umfasst 20 mg bis 50 mg pro 100 mL Magnesium, 70 mg bis 130 mg pro 100 mL Natrium und 90 mg bis 160 mg pro 100 mL Chlorid.

Diese enterale Sondennahrung umfasst 8,0 g bis 14,0 g Protein pro 100 mL. Bevorzugt ist dabei, dass die enterale Sondennahrung 9,0 g bis 14,0 g Protein pro 100 mL umfasst. Noch mehr bevorzugt ist, dass die enterale Sondennahrung 10,0 g bis 13,0 g Protein pro 100 mL umfasst, am meisten bevorzugt 10,0 g bis 12,0 g Protein pro 100 mL.

In dieser bevorzugten Ausführungsform umfasst die hochkalorische enterale Sondennahrung pro 100 mL beispielsweise 20 mg bis 50 mg pro 100 mL Magnesium, 70 mg bis 130 mg pro 100 mL Natrium und 90 mg bis 160 mg pro 100 mL Chlorid, 100 mg bis 190 mg Kalium, 150 mg bis 220 mg Calcium und 90 mg bis 150 mg Phosphor.

Ebenfalls bevorzugt ist, dass die hochkalorische enterale Sondennahrung pro 100 mL 25 mg bis 40 mg pro Magnesium, 75 mg bis 120 mg Natrium, 100 mg bis 150 mg Chlorid, 130 mg bis 180 mg Kalium, 170 mg bis 215 mg Calcium und 100 mg bis 140 mg Phosphor umfasst.

Besonders bevorzugt ist, dass die hochkalorische enterale Sondennahrung pro 100 mL 30 mg bis 35 mg Magnesium, 80 mg bis 100 mg Natrium, 110 mg bis 140 mg Chlorid, 140 mg bis 170 mg Kalium, 190 mg bis 210 mg Calcium und 115 mg bis 130 mg Phosphor umfasst.

Ganz besonders bevorzugt ist es, dass die hochkalorische enterale Sondennahrung pro 100 mL 81 mg Natrium, 160 mg Kalium, 200 mg Calcium, 30 mg Magnesium, 120 mg Phosphor und 126 mg Chlorid umfasst.

In der hier beschriebenen Ausführungsform besteht das Protein zu 20% Gew. bis 70% Gew. aus Gesamtmilchprotein und zu 80% Gew. bis 30% Gew. aus Calcium-Caseinat. Dabei ist es bevorzugt, dass das Protein zu 30% Gew. bis 50% Gew. aus Gesamtmilchprotein und zu 70% Gew. bis 50% Gew. aus Calcium-Caseinat besteht. Am meisten bevorzugt ist es, dass das Protein zu 40% Gew. aus Gesamtmilchprotein und zu 60% Gew. aus Calcium-Caseinat besteht.

Dabei weist in der hier beschriebenen Ausführungsform das in der enteralen Sondennahrung enthaltene Gesamtmilchprotein einen Caseingehalt von 80% Gew. und einen Molkenproteingehalt von 20% Gew. auf oder einen Caseingehalt von 90% Gew. bis 98% Gew., bevorzugt 92% Gew., und einen Molkenproteingehalt von 10% Gew. bis 2% Gew., bevorzugt 8% Gew.

Ferner besonders bevorzugt ist es in dieser Ausführungsform, dass die enterale Sondennahrung 16 bis 35 Energieprozent aus Protein, 30 bis 38 Energieprozent aus Kohlenhydraten und 35 bis 55 Energieprozent aus Öl umfasst. Ganz besonders bevorzugt ist es dabei, dass die enterale Sondennahrung 20 bis 30 Energieprozent aus Protein, 32 bis 38 Energieprozent aus Kohlenhydraten und 37 bis 48 Energieprozent aus Öl umfasst. Am meisten bevorzugt ist es, dass die enterale Sondennahrung 20 bis 24 Energieprozent aus Protein, 33 bis 35 Energieprozent aus Kohlenhydraten und 39 bis 45 Energieprozent aus Öl umfasst.

Eine enterale Sondennahrung mit dieser ganz besonders bevorzugten Energiezusammensetzung ist beispielsweise eine enterale Sondennahrung, die pro 100 mL 10 g bis 12 g Protein, 16,5 g bis 17,5 g Kohlenhydrate und 10 g Öle umfasst.

In einer besonders bevorzugten Ausführungsform umfasst die hochkalorische enterale Sondennahrung pro 100 mL etwa 10 g bis etwa 12 g Protein, bestehend aus 30% Gew. bis 50% Gew. Gesamtmilchprotein und aus 70% Gew. bis 50% Gew. Calcium-Caseinat, bevorzugt 40 % Gew. Gesamtmilchprotein und 60% Gew. Calcium-Caseinat. Dabei weist das Gesamtmilchprotein einen Caseingehalt von 80% Gew. und einen Molkenproteingehalt von 20% Gew. auf oder weist einen Caseingehalt von 90% Gew. bis 98% Gew., bevorzugt 92% Gew., und einen Molkenproteingehalt von 10% Gew. bis 2% Gew., bevorzugt 8% Gew. auf.

In dieser besonders bevorzugten Ausführungsform umfasst die enterale Sondennahrung ferner etwa 10 g Öl und etwa 16,5 g oder etwa 17,5 g Kohlenhydrate. Besonders bevorzugt ist es dabei, die Kohlenhydrate in Form von Glukosesirup mit einem mittleren DE Wert von 28 bis 31 bereitzustellen. Dabei ist es ganz besonders bevorzugt, dass der Glukosesirup mit einem mittleren DE Wert von 28 bis 31 lediglich 2% bis 3%, bevorzugt 2,5%, des Monosaccharids Glukose und lediglich 10% bis 12 %, bevorzugt 11%, des Disaccharids Maltose umfasst.

Auch kann die enterale Sondennahrung in dieser besonders bevorzugten Ausführungsform etwa 2 g Ballaststoffe pro 100 mL umfassen. In diesem Fall umfasst die enterale Sondennahrung neben den enthaltenen Ballaststoffen 16,5 g Kohlenhydrate. Die enterale Sondennahrung kann saccharosefrei sein.

Diese besonders bevorzugte enterale Sondennahrung hat eine Viskosität von 60 mPa s - 150 mPa s bei einer Temperatur von 20 °C und einer Scherrate von 1 s⁻¹ und eine Osmolarität von 420 mosmol/L - 440 mosmol/L. Der Energiegehalt beträgt etwa 2 kcal/mL.

In dieser besonders bevorzugten Ausführungsform umfasst die hochkalorische enterale Sondennahrung pro 100 mL beispielsweise 20 mg bis 50 mg pro 100 mL Magnesium, 70 mg bis 130 mg pro 100 mL Natrium und 90 mg bis 160 mg pro 100 mL Chlorid, 100 mg bis 190 mg Kalium, 150 mg bis 220 mg Calcium und 90 mg bis 150 mg Phosphor. Ebenfalls bevorzugt ist, dass diese besonders bevorzugte hochkalorische enterale Sondennahrung pro 100 mL 25 mg bis 40 mg pro Magnesium, 75 mg bis 120 mg Natrium, 100 mg bis 150 mg Chlorid, 130 mg bis 180 mg Kalium, 170 mg bis 215 mg Calcium und 100 mg bis 140 mg Phosphor umfasst. Besonders bevorzugt ist, dass die hochkalorische enterale Sondennahrung pro 100 mL 30 mg bis 35 mg Magnesium, 80 mg bis 100 mg Natrium, 110 mg bis 140 mg Chlorid, 140 mg bis 170 mg Kalium, 190 mg bis 210 mg Calcium und 115 mg bis 130 mg Phosphor umfasst. Ganz besonders bevorzugt ist es, dass die hochkalorische enterale Sondennahrung pro 100 mL 81 mg Natrium, 160 mg Kalium, 200 mg Calcium, 30 mg Magnesium, 120 mg Phosphor und 126 mg Chlorid umfasst.

### Beispiele

### Beispiel 1: Verfahren zur Herstellung einer hochkalorischen proteinreichen enteralen Sondennahrung.

Bei der Herstellung der enteralen Sondennahrung wurden zunächst unlösliche Ballaststoffe sowie die Proteine in Form von Gesamtmilchprotein und Calcium-Caseinat in Wasser dispergiert und gemischt. Lösliche und unlösliche Ballaststoffe sind nur optional in der enteralen Sondennahrung enthalten. Anschließend wurden Öle und öllösliche Emulgatoren langsam hinzudosiert. Bevorzugt ist es, zur Bildung einer Voremulsion nun noch mehrere Minuten zu dispergieren und zu emulgieren. Anschließend wurden die Kohlenhydrate in Form von Glukosesirup hinzugegeben und gelöst. Nachfolgend wurden Mineralstoffe, essentielle Spurenelemente und Vitamine in der enteralen Sondennahrung dispergiert und gemischt. Essentielle Spurenelemente und Vitamine sind ebenfalls nur optional in der enteralen Sondennahrung enthalten.

Am Ende des Anmischprozesses kann optional der pH-Wert der enteralen Sondennahrung mit Hilfe eines Säureregulators eingestellt werden.

Die enterale Sondennahrung wurde nun auf 120 °C bis 145 °C erhitzt. Das Erhitzen erfolgte solange, bis ein F₀-Wert von 6 bis 15 erreicht war.

Anschließend wurde die so erhaltene sterile enterale Sondennahrung in EasyBag Kunststoffbeutel abgefüllt. Da die Kunststoffbeutel selbst nicht steril sind, erfolgt eine Nachsterilisation, so lange, bis ein F₀-Wert von 1 bis 5 erreicht ist.

### Beispiel 2: Verschiedene beispielhafte enterale Sondennahrungen

### a) Enterale Sondennahrungen umfassend die folgenden Bestandteile (Angaben gezogen auf 1 L sofern nicht anders angegeben) wurden hergestellt:

| Sondennahrung | A | B | C |
|---|---|---|---|
| Gesamtmilchprotein | 40 g | 40 g | 40 g |
| Calcium-Caseinat | 60 g | 60 g | 60 g |
| Rüböl | 60 g | 60 g | 60 g |
| Sonnenblumenöl | 40 g | 40 g | 40 g |
| Glukosesirup | 175 g | 175 g | 175 g |
| Natrium | 700 mg | 1300 mg | 810 mg |
| Kalium | 1000 mg | 1900 mg | 1600 mg |
| Calcium | 1500 mg | 2200 mg | 2000 mg |
| Magnesium | 200 mg | 500 mg | 300 mg |
| Phosphor | 900 mg | 1500 mg | 1200 mg |
| Chlorid | 900 mg | 1600 mg | 1260 mg |
| Spurenelemente | bedarfs deckend | bedarfsdeckend | bedarfsdeckend |
| Vitamine | bedarfsdeckend | bedarfsdeckend | bedarfsdeckend |

Die so hergestellten enteralen Sondennahrungen A, B und C haben eine Viskosität von 60 mPa s - 150 mPa s bei einer Temperatur von 20 °C und bei einer Scherrate von 1 s⁻¹ und eine Osmolarität von 420 mosmol/L - 440 mosmol/L. Die Kaloriendichte beträgt etwa 2 kcal/mL. Das verwendete Gesamtmilchprotein besteht zu 80 % Gew. aus Casein und zu 20 % Gew. aus Molkenprotein. Der Glukosesirup kann einen mittleren DE Wert von 28-31 aufweisen.

| Sondennahrung | A' | B' | C' |
|---|---|---|---|
| Gesamtmilchprotein | 40 g | 40 g | 40 g |
| Galcium-Caseinat | 60 g | 60 g | 60 g |
| Rüböl | 60 g | 60 g | 60 g |
| Sonnenblumenöl | 40 g | 40 g | 40 g |
| Glukosesirup | 175 g | 175 g | 175 g |
| Natrium | 700 mg | 1300 mg | 810 mg |
| Kalium | 1000 mg | 1900 mg | 1600 mg |
| Calcium | 1500 mg | 2200 mg | 2000 mg |
| Magnesium | 200 mg | 500 mg | 300 mg |
| Phosphor | 900 mg | 1500 mg | 1200 mg |
| Chlorid | 900 mg | 1600 mg | 1260 mg |
| Spurenelemente | bedarfsdeckend | bedarfsdeckend | bedarfsdeckend |
| Vitamine | bedarfsdeckend | bedarfsdeckend | bedarfsdeckend |

Die so hergestellten enteralen Sondennahrungen A', B' und C' haben eine Viskosität von 60 mPa s - 150 mPa s bei einer Temperatur von 20 °C und bei einer Scherrate von 1 s¹ und eine Osmolarität von 400 mosmol/L - 600 mosmol/L. Die Kaloriendichte beträgt etwa 2 kcal/mL. Das verwendete Gesamtmilchprotein besteht zu 92 % Gew. aus Casein und zu 8% Gew. aus Molkenprotein. Der Glukosesirup kann einen mittleren DE Wert von 28-31 aufweisen.

| Sondennahrung | A" | B" | C" |
|---|---|---|---|
| Gesamtmilchprotein | 40 g | 40 g | 40 g |
| Calcium-Caseinat | 60 g | 60 g | 60 g |
| Rüböl | 60 g | 60 g | 60 g |
| Sonnenblumenöl | 40 g | 40 g | 40 g |
| Glukosesirup | 175 g | 175 g | 175 g |
| Natrium | 7 00 mg | 1300 mg | 810 mg |
| Kalium | 1000 mg | 1900 mg | 1600 mg |
| Calcium | 1500 mg | 2200 mg | 2000 mg |
| Magnesium | 200 mg | 500 mg | 300 mg |
| Phosphor | 900 mg | 1500 mg | 1200 mg |
| Chlorid | 900 mg | 1600 mg | 1260 mg |
| Spurenelemente | bedarfsdeckend | bedarfsdeckend | bedarfsdeckend |
| Vitamine | bedacfsdeckend | bedarfsdeckend | bedarfsdeckend |

Die so hergestellten enteralen Sondennahrungen A", B" und C" haben eine Viskosität von 60 mPa s - 150 mPa s bei einer Temperatur von 20 °C und bei einer Scherrate von 1 s⁻¹ und eine Osmolarität von 420 mosmol/L - 440 mosmol/L. Die Kaloriendichte beträgt etwa 2 kcal/mL. Das verwendete Gesamtmilchprotein besteht zu 99 % Gew. aus Casein und zu 1 % Gew. aus Molkenprotein. Der Glukosesirup kann einen mittleren DE Wert von 28-31 aufweisen.

### b) Enterale Sondennahrungen umfassend die folgenden Bestandteile (Angaben bezogen auf 1L sofern nicht anders angegeben) wurden hergestellt:

| Sondennahrung | D | E | F |
|---|---|---|---|
| Gesamtmilchprotein | 20 g | 20 g | 20 g |
| Calcium-Caseinat | 80 g | 80 g | 80 g |
| Rüböl | 60 g | 60 g | 60 g |
| Sonnenblumenöl | 40 g | 40 g | 40 g |
| Glukosesirup | 175 g | 175 g | 175 g |
| Natrium | 700 mg | 1300 mg | 810 mg |
| Kalium | 1000 mg | 1900 mg | 1600 mg |
| Calcium | 1500 mg | 2200 mg | 2000 mg |
| Magnesium | 200 mg | 500 mg | 300 mg |
| Phosphor | 900 mg | 1500 mg | 1200 mg |
| Chlorid | 900 mg | 1600 mg | 1260 mg |
| Spurenelemente | bedarfsdeckend | bedaffsdeckend | bedarfsdeckend |
| Vitamine | bedarfsdeckend | bedarfsdeckend | bedarfsdeckend |

Die so hergestellten enteralen Sondennahrungen D, E und F haben eine Viskosität von 60 - 150 mPa s bei einer Temperatur von 20 °C und bei einer Scherrate von 1 s⁻¹ und eine Osmolarität von 420 mosmol/L - 440 mosmol/L. Die Kaloriendichte beträgt etwa 2 kcal/mL. Das verwendete Gesamtmilchprotein besteht zu 80 % Gew. aus Casein und zu 20 % Gew. aus Molkenprotein. Der Glukosesirup kann einen mittleren DE Wert von 28-31 aufweisen.

| Sondennahrung | D' | E' | F' |
|---|---|---|---|
| Gesamtmilchprotein | 20 g | 20 g | 20 g |
| Calcium-Caseinat | 80 g | 80 g | 80 g |
| Rüböl | 60 g | 60 g | 60 g |
| Sonnenblumenöl | 40 g | 40 g | 40 g |
| Glukosesirup | 175 g | 175 g | 175 g |
| Natrium | 700 mg | 1300 mg | 810 mg |
| Kalium | 1000 mg | 1900 mg | 1600 mg |
| Calcium | 1500 mg | 2200 mg | 2000 mg |
| Magnesium | 200 mg | 500 mg | 300 mg |
| Phosphor | 900 mg | 1500 mg | 1200 mg |
| Chlorid | 900 mg | 1600 mg | 1260 mg |
| Spurenelemente | bedarfsdeckend | bedarfsdeckend | bedarfsdeckend |
| Vitamine | bedarfsdeckend | bedarfsdeckend | bedarfsdeckend |

Die so hergestellten enteralen Sondennahrungen D', E' und F' haben eine Viskosität von 60 mPa s - 150 mPa s bei einer Temperatur von 20 °C und bei einer Scherrate von 1 s⁻¹ and eine Osmolarität von 420 mosmol/L - 440 mosmol/L. Die Kaloriendichte beträgt etwa 2 kcal/mL. Das verwendete Gesamtmilchprotein besteht zu 92 % Gew. aus Casein und zu 8% Gew. aus Molkenprotein. Der Glukosesirup kann einen mittleren DE Wert von 28-31 aufweisen.

| Sondennahrung | D" | E" | F" |
|---|---|---|---|
| Gesamtmilchprotein | 20 g | 20 g | 20 g |
| Calcium-Caseinat | 80 g | 80 g | 80 g |
| Rüböl | 60 g | 60 g | 60 g |
| Sonnenblumenöl | 40 g | 40 g | 40 g |
| Glukosesirup | 175 g | 175 g | 175 g |
| Natrium | 700 mg | 1300 mg | 810 mg |
| Kalium | 1000 mg | 1900 mg | 1600 mg |
| Calcium | 1500 mg | 2200 mg | 2000 mg |
| Magnesium | 200 mg | 500 mg | 300 mg |
| Phosphor | 900 mg | 1500 mg | 1200 mg |
| Chlorid | 900 mg | 1600 mg | 1260 mg |
| Spurenelemente | bedarfsdeckend | bedarfsdeckend | bedarfsdeckend |
| Vitamine | bedarfsdeckend | bedarfsdeckend | bednrfsdeckend |

Die so hergestellten enteralen Sondennahrungen D", E" und F" haben eine Viskosität von 60 mPa s - 150 mPa s bei einer Temperatur von 20 °C und bei einer Scherrate von 1 s⁻¹ und eine Osmolarität von 420 mosmol/L - 440 mosmol/L. Die Kaloriendichte beträgt etwa 2 kcal/mL. Das verwendete Gesamtmilchprotein besteht zu 99 % Gew. aus Casein und zu 1 % Gew. aus Molkenprotein. Der Glukosesirup kann einen mittleren DE Wert von 28-31 aufweisen.

### c) Enterale Sondennahrungen umfassend die folgenden Bestandteile (Angaben bezogen auf 1 L sofern nicht anders angegeben) wurden hergestellt:

| Sondennahrung | G | H | I |
|---|---|---|---|
| Gesamtmilchprotein | 70 g | 70 g | 70 g |
| Calcium-Caseinat | 30 g | 30 g | 30 g |
| Rüböl | 60 g | 60 g | 60 g |
| Sonnenblumenöl | 40 g | 40 g | 40 g |
| Glukosesirup | 175 g | 175 g | 175 g |
| Natrium | 700 mg | 1300 mg | 810 mg |
| Kalium | 1000 mg | 1900 mg | 1600 mg |
| Calcium | 1500 mg | 2200 mg | 2000 mg |
| Magnesium | 200 mg | 500 mg | 300 mg |
| Phosphor | 900 mg | 1500 mg | 1200 mg |
| Chlorid | 900 mg | 1600 mg | 1260 mg |
| Spurenelemente | bedarfsdeckend | bedarfsdeckend | bedarfsdeckend |
| Vitamine | bedarfsdeckend | bedarfsdeckend | bedarfsdeckend |

Die so hergestellten enteralen Sondennahrungen G, H und I haben eine Viskosität von 60 mPa s - 150 mPa s bei einer Temperatur von 20 °C und bei einer Scherrate von 1 s⁻¹ und eine Osmolarität von 420 mosmol/L - 440 mosmol/L. Die Kaloriendichte beträgt etwa 2 kcal/mL. Das verwendete Gesamtmilchprotein besteht zu 80 % Gew. aus Casein und zu 20 % Gew. aus Molkenprotein. Der Glukosesirup kann einen mittleren DE Wert von 28-31 aufweisen.

| Sondennahrung | G' | H' | I' |
|---|---|---|---|
| Gesamtmilchprotein | 70 g | 70 g | 70 g |
| Calcium-Caseinat | 30 g | 30 g | 30 g |
| Rüböl | 60 g | 60 g | 60 g |
| Sonnenblumenöl | 40 g | 40 g | 40 g |
| Glukosesirup | 175 g | 175 g | 175 g |
| Natrium | 700 mg | 1300 mg | 810 mg |
| Kalium | 1000 mg | 1900 mg | 1600 mg |
| Calcium | 1500 mg | 2200 mg | 2000 mg |
| Magnesium | 200 mg | 500 mg | 300 mg |
| Phosphor | 900 mg | 1500 mg | 1200 mg |
| Chlorid | 900 mg | 1600 mg | 1260 mg |
| Spurenelemente | bedarfsdeckend | bedarfsdeckend | bedarfsdeckend |
| Vitamine | bedarfsdeckend | bedarfsdeckend | bedarfsdeckend |

Die so hergestellten enteralen Sondennahrungen G', H' und I' haben eine Viskosität von 60 mPa s - 150 mPa s bei einer Temperatur von 20 °C und bei einer Scherrate von 1 s⁻¹ und eine Osmolarität von 420 mosmol/L - 440 mosmol/L. Die Kaloriendichte beträgt etwa 2 kcal/mL. Das verwendete Gesamtmilchprotein besteht zu 92 % Gew. aus Casein und zu 8% Gew. aus Molkenprotein. Der Glukosesirup kann einen mittleren DE Wert von 28-31 aufweisen.

| Sondennahrung | G" | H" | I" |
|---|---|---|---|
| Gesamtmilchprotein | 70 g | 70 g | 70 g |
| Calcium-Caseinat | 30 g | 30 g | 30 g |
| Rüböl | 60 g | 60 g | 60 g |
| Sonnenblumenöl | 40 g | 40 g | 40 g |
| Glukosesirup | 175 g | 175g | 175 g |
| Natrium | 700 mg | 1300 mg | 810 mg |
| Kalium | 1000 mg | 1900 mg | 1600 mg |
| Calcium | 1500 mg | 2200 mg | 2000 mg |
| Magnesium | 200 mg | 500 mg | 300 mg |
| Phosphor | 900 mg | 1500 mg | 1200 mg |
| Chlorid | 900 mg | 1600 mg | 1260 mg |
| Spurenelemente | bedarfsdeckend | bedarfsdeckend | bedarfsdeckend |
| Vitamine | bedarfsdeckend | bedarfsdeckend | bedarfsdeckend |

Die so hergestellten enteralen Sondennahrungen G", H" und I" haben eine Viskosität von 60 mPa s - 150 mPa s bei einer Temperatur von 20 °C und bei einer Scherrate von 1 s⁻¹ und eine Osmolarität von 420 mosmol/L - 440 mosmol/L. Die Kaloriendichte beträgt etwa 2 kcal/mL. Das verwendete Gesamtmilchprotein besteht zu 99 % Gew. aus Casein und zu 1 % Gew. aus Molkenprotein. Der Glukosesirup kann einen mittleren DE Wert von 28-31 aufweisen.

### d) Eine enterale Sondennahrung umfassend die folgenden Bestandteile (Angaben bezogen auf 1 L sofern nicht anders angegeben) wurde hergestellt:

| Sondennahrung | J | K | L |
|---|---|---|---|
| Gesamtmilchprotein | 40 | 40 | 40 |
| Calcium-Caseinat | 60 | 60 | 60 |
| Rüböl | 42,8 g | 42,8 g | 42,8 g |
| Sonnenblumenöl | 30 g | 30 g | 30 g |
| MCT Öl | 25 g | 25 g | 25 g |
| Fischöl | 2,2 g | 2,2 g | 2,2 g |
| Glukosesirup | 175 g | 175 g | 175 g |
| Natrium | 700 mg | 130 mg | 810 mg |
| Kalium | 1000 mg | 1900 mg | 1600 mg |
| Calcium | 1500 mg | 2200 mg | 2000 mg |
| Magnesium | 200 mg | 500 mg | 300 mg |
| Phosphor | 900 mg | 1500 mg | 1200 mg |
| Chlorid | 900 mg | 1600 mg | 1260 mg |
| Spurenelemente | bedarfsdeckend | bedarfsdeckend | bedarfsdeckend |
| Vitamin | bedarfsdeckend | bedarfsdeckend | bedarfsdeckend |

Die so hergestellten enteralen Sondennahrungen J, K und L haben eine Viskosität von 60 mPa s - 150 mPa s bei einer Temperatur von 20 °C und bei einer Scherrate von 1 s⁻¹ und eine Osmolarität von 420 mosmol/L - 440 mosmol/L. Die Kaloriendichte beträgt etwa 2 kcal/mL. Der Glukosesirup kann einen mittleren DE Wert von 28-31 aufweisen.

### e) Eine enterale Sondennahrung umfassend die folgenden Bestandteile (Angaben bezogen auf 1 L sofern nicht anders angegeben) wurde hergestellt:

| Sondennahrung | M | N | O |
|---|---|---|---|
| Gesamtmilchprotein | 40 | 40 | 40 |
| Calcium-Caseinat | 60 | 60 | 60 |
| Rüböl | 60 g | 60 g | 60g |
| Sonnenblumenöl | 40 g | 40 g | 40 g |
| Glukosesirup | 165 g | 165 g | 165 g |
| Chicoree-Extrakt | 9 g | 9 g | 9 g |
| Weizen Dextrin | 4 g | 4 g | 4 g |
| Cellulose | 7 g | 7 g | 7 g |
| Natrium | 700 mg | 1300 mg | 810 mg |
| Kalium | 1000 mg | 1900 mg | 1600 mg |
| Calcium | 1500 mg | 2200 mg | 2000 mg |
| Magnesium | 200 mg | 500 mg | 300 mg |
| Phosphor | 900 mg | 1500 mg | 1200 mg |
| Chlorid | 900 mg | 1600 mg | 1260 mg |
| Spurenelemente | bedarfsdeckend | bedarfsdeckend | bedarfsdeckend |
| Vitamin | bedarfsdeckend | bedarfsdeckend | bedarfsdeckend |

Die so hergestellten enteralen Sondennahrungen M, N, O haben eine Viskosität von 60 mPa s - 130 mPa s bei einer Temperatur von 20 °C und bei einer Scherrate von 1 s⁻¹ und eine Osmolarität von 420 mosmol/L - 440 mosmol/L. Die Kaloriendichte beträgt etwa 2 kcal / mL. Der Glukosesirup kann einen mittleren DE Wert von 28-31 aufweisen.

### f) Eine enterale Sondennahrung umfassend die folgenden Bestandteile (Angaben bezogen auf 1 L sofern nicht anders angegeben) wurde hergestellt:

| Sondennahrung | P | Q | R |
|---|---|---|---|
| Gesamtmilchprotein | 40 | 40 | 40 |
| Calcium-Caseinat | 60 | 60 | 60 |
| Rüböl | 42,8 g | 42,8 g | 42,8 g |
| Sonnenblumenöl | 30 g | 30 g | 30 g |
| MCT Öl | 25 g | 25 g | 25 g |
| Fischöl | 2,2 g | 2,2 g | 2,2 g |
| Rüböl | 60 g | 60 g | 60g |
| Sonnenblumenöl | 40 g | 40 g | 40 g |
| Glukosesirup | 165 g | 165 g | 165 g |
| Chicoree-Extrakt | 9 g | 9 g | 9 g |
| Weizen Dextrin | 4 g | 4 g | 4 g |
| Cellulose | 7 g | 7 g | 7 g |
| Natrium | 700 mg | 1300 mg | 810 mg |
| Kalium | 1000 mg | 1900 mg | 1600 mg |
| Calcium | 1500 mg | 2200 mg | 2000 mg |
| Magnesium | 200 mg | 500 mg | 300 mg |
| Phosphor | 900 mg | 1500 mg | 1200 mg |
| Chlorid | 900 mg | 1600 mg | 1260 mg |
| Spurenelemente | bedarfsdeckend | bedarfsdeckend | bedarfsdeckend |
| Vitamin | bedarfsdeckend | bedarfsdeckend | bedarfsdeckend |

Die so hergestellten enteralen Sondennahrungen P, Q, R haben eine Viskosität von 60 mPa s - 130 mPa s bei einer Temperatur von 20 °C und bei einer Scherrate von 1 s⁻¹ und eine Osmolarität von 420 mosmol/L - 440 mosmol/L. Die Kaloriendichte beträgt 2 kcal / mL. Der Glukosesirup kann einen mittleren DE Wert von 28-31 aufweisen.

### g) Die in Beispiel 2 a) - 2 f) hergestellten enteralen Sondennahrungen wurden wie dort beschrieben hergestellt. Dabei wurden die folgenden Vitamine und Spurenelemente verwendet:

| **Spurenlelement** | **Menge** | **Einheit** |
|---|---|---|
| Eisen (Fe) | 2,67 | mg/100ml |
| Zink (Zn) | 2,4 | mg/100ml |
| Kupfer (Cu) | 267 | µg/100ml |
| Mangan (Mn) | 0,53 | mg/100ml |
| Iod (I) | 26,7 | µg/100ml |
| Fluor (F) | 0,27 | mg/100ml |
| Chrom (Cr) | 13,3 | µg/100ml |
| Molybdän (Mo) | 20 | µg/100ml |
| Selen (Se) | 13,3 | µg/100ml |

| **Vitamin** | **Menge** | **Einheit** |
|---|---|---|
| Vitamin A | 140 | µg/100ml |
| ß-Carotin | 270 | µg/100ml |
| Vitamin D3 | 2 | µg/100ml |
| Vitamin E | 2,67 | mg/100ml |
| Vitamin K1 | 13,3 | µg/100ml |
| Vitamin B1 | 0,27 | mg/100ml |
| Vitamin B2 | 0,35 | mg/100ml |
| Niacin 3,2 | | mg/100ml |
| Vitamin B6 | 0,32 | mg/100ml |
| Vitamin B12 | 0,53 | µg/100ml |
| Pantothensäure. | 0,93 | mg/100ml |
| Biotin | 10 | µg/100ml |
| Folsäure | 53,3 | µg/100ml |
| Vitamin C | 13,3 | mg/100ml |

### h) Eine enterale Sondennahrung umfassend die folgenden Bestandteile wurde hergestellt:

### Lösung S:

| **Energiequelle** | **Energieverteilung** | **Einheit** |
|---|---|---|
| Proteine | 20 | Energieprozent |
| Kohlenhydrate | 35 | Energieprozent |
| Fette | 45 | Energieprozent |
| **Osmolarität** | **Wert** | **Einheit** |
| | 420-440 | mosmol/l |

| **Fett/Öl** | **Menge** | **Einheit** |
|---|---|---|
| Fischöl | 2,2 | g/L |
| MCT Öl | 25,0 | g/L |
| Sonnenblumenöl | 30,0 | g/L |
| Rüböl | 42,3 | g/L |
| ***Gesamt*** | ***99,5*** | ***g*/*L*** |
| ***davon*** | | |
| EPA+DHA | 0,7 | g/L |
| PUFA | 16,7 | g/L |
| MUFA | 48,4 | g/L |
| SFA | 30,3 | g/L |
| MCT | 25 | g/L |
| n-6/n-3 | 2,6 / 1 | |

| **Kohlenhydrate** | **Menge** | **Einheit** |
|---|---|---|
| Glukosesirup (Zusammensetzung ohne Ballaststoffe) | 175 | g/L |
| Glukosesirup (Zusammensetzung mit Ballaststoffen) | 165 | g/L |
| *Optional:* | | |

| **Ballaststoffe** | **Menge** | **Einheit** |
|---|---|---|
| Inulin | 8,9 | g/L |
| Weizen Dextrim | 3,91 | g/L |
| Cellulose | 7,22 | g/L |
| ***Gesamt*** | ***20,0*** | ***g*/*L*** |
| ***davon*** | | |
| fermentierbar | 61% | |
| nicht fermentierbar | 39% | |

| **Protein** | **Menge** | **Einheit** |
|---|---|---|
| Ca-Caseinat | 60 | ***g*/*L*** |
| Gesamtmilchprotein | 40 | ***g*/*L*** |
| ***Gesamt*** | ***100*** | ***g*/*L*** |

| **Mineralstoff** | **Menge** | **Einheit** |
|---|---|---|
| Na | 80 | mg/100ml |
| K | 160 | mg/100ml |
| Ca | 200 | mg/100ml |
| Mg | 30 | mg/100ml |
| P | 120 | mg/100ml |
| Cl | 126 | mg/100ml |

| **Spurenelement** | **Menge** | **Einheit** |
|---|---|---|
| Eisen (Fe) | 2,67 | mg/100ml |
| Zink (Zn) | 2,4 | mg/100ml |
| Kupfer (Cu) | 267 | µg/100ml |
| Mangan (Mn) | 0,53 | mg/100ml |
| Iod (I) | 26,7 | µg/100ml |
| Fluor (F) | 0,27 | mg/100ml |
| Chrom (Cr) | 13,3 | µg/100ml |
| Molybdän (Mo) | 20 | µg/100ml |
| Selen (Se) | 13,3 | µg/100ml |

| **Vitamin** | **Menge** | **Einheit** |
|---|---|---|
| Vitamin A | 140 | µg/100ml |
| β-Carotin | 270 | µg/100ml |
| Vitamin D3 | 2 | µg/100ml |
| Vitamin E | 2,67 | mg/100ml |
| Vitamin K1 | 13,3 | µg/100ml |
| Vitamin B1 | 0,27 | mg/100ml |
| Vitamin B2 | 0,35 | mg/100ml |
| Niacin | 3,2 | mg/100ml |
| Vitamin B6 | 0,32 | mg/100ml |
| Vitamin B12 | 0,53 | µg/100ml |
| Pantothensäure | 0,93 | mg/100ml |
| Biotin | 10 | µg/100ml |

Die Zugabe von Ballastoffen zu der enteralen Sondennahrung ist optional. Werden Ballaststoffe zugegeben, beträgt der Kohlenhydratgehalt 165 g/L. Werden keine Ballaststoffe zugegeben, beträgt der Kohlenhydratgehalt 175 g/L. Die Lösung hat einen Energiegehalt von 2,0 kcal/mL. Der Glukosesirup kann einen mittleren DE Wert von 28-31 aufweisen.

### Beispiel 3: Verpackungsgrößen; Verabreichung

Die enterale Sondennahrung wird wie in Beispiel 1 beschrieben hergestellt. Das Produkt wird in Behältnisse von 500 mL, 1000 mL oder 1500 mL abgefüllt. Die Abfüllung erfolgt in flexible Kunststoffbeutel (EasyBag), Kunststoffflaschen oder in 500ml Glasflaschen.

### Beispiel 4: Verabreichung der enteralen Sondennahrung

Mit einem Beutel von 500 mL bzw. 1000 mL werden an Patienten 1000 kcal bzw. 2000 kcal einer enteralen Sondennahrung von 2 kcal/ml wie in Beispiel 2 hergestellt (Lösungen A bis R und S) verabreicht. Die Verabreichung erfolgt enteral über eine Ernährungssonde. Es können andere Kalorienmengen verabreicht werden. Dazu werden Volumina verabreicht, dann muss jedoch die im Beutel verbleibende Restmenge verworfen werden, um einer mikrobiellen Verunreinigung der enteralen Sondennahrung vorzubeugen.

### Beispiel 5: Mineralstoffversorgung

Die im Beispiel 2 hergestellten enteralen Sondennahrungen B und C wurden über einen Zeitraum von 3 oder 12 Monaten an Patienten mit erhöhtem Kalorienbedarf und/oder Proteinbedarf sowie an Patienten mit einer Flüssigkeitsrestriktion verabreicht. Die Verabreichung erfolgte kontinuierlich oder im Bolus. Das Auftreten von Mineralmangelerscheinungen oder Nebenwirkungen wie Diarrhö, Distension oder Erbrechen wurde kontrolliert.

In gleicher Weise wurden die im Beispiel 2 hergestellten enteralen Sondennahrungen N und O sowie Q und R verabreicht.

Zusammenfassend konnten die erfindungsgcmäßen enteralen Sondennahrungen über einen Zeitraum von 3 oder 12 Monaten ohne das Auftreten von Mineralmangelerscheinungen oder Nebenwirkungen wie Diarrhoen oder Erbrechen an Ältere und an Patienten verabreicht werden. Die Sondennahrungen B und C zeigten eine hervorragende Verträglichkeit, von der ganz besonders Ältere profitierten. Neben den enteralen Sondennahrungen B und C zeigten auch die enteralen Sondennahrungen N und O sowie Q und R eine hervorragende Verträglichkeit, was unter anderem auf den verdauungsfördernden Effekt der beigesetzten Ballaststoffe in diesen Sondennahrungen zurückzuführen ist.

### Beispiel 6: Verwendung der enteralen Sondennahrung zur Behandlung von Kachexie, Proteinmangel und Protein-Energie Mangelsyndrom

Die erfindungsgemäße enterale Sondennahrung (enterale Sondennahrungen A-R und S) wird an Patienten mit Kachexie, Proteinmangel oder Protein-Energie Manglsyndrom enteral verabreicht. Die enterale Sondennahrung zeigt eine gute Verträglichkeit. Nebenwirkungen wie Diarrhö, Erbrechen oder Distension werden nicht beobachtet. Durch den hohen Proteingehalt der erfindungsgemäßen enteralen Sondennahrung kann eine negative Stickstoffbilanz vermieden oder vermindert werden. Ein Verlust an fettfreier Körpermasse, insbesondere an Muskelmasse, kann vermieden oder vermindert werden.

## Patentansprüche

1. Hochkalorische enterale Sondennahrung mit einem Energiegehalt von mindestens 2,0 kcal pro mL, **dadurch gekennzeichnet, dass** die hochkalorische enterale Sondennahrung pro 100 mL etwa 8,0 g bis etwa 14,0 g Protein sowie einen Mineralstoff umfasst, der ausgewählt ist aus der Gruppe bestehend aus mindestens 20 mg pro 100 mL Magnesium, mindestens 70 mg pro 100 mL Natrium, mindestens 90 mg pro 100 mL Chlorid oder einer Kombination davon, wobei das Protein Gesamtmilchprotein und Calcium-Caseinat umfasst und wobei die hochkalorische enterale Sondennahrung bei einer Temperatur von 20 °C und bei einer Scherrate von 1 s-1 eine Viskositat von etwa 50 bis etwa 180 mPa s besitzt.

2. Hochkalorische enterale Sondennahrung gemäß Anspruch 1, wobei die hochkalorische enterale Sondennahrung einen Mineralstoff umfasst, der ausgewählt ist aus der Gruppe bestehend aus 20 mg bis 50 mg pro 100 mL Magnesium, 70 mg bis 130 mg pro 100 mL Natrium, 90 mg bis 160 mg pro 100 mL Chlorid oder einer Kombination davon, bevorzugt wobei die hochkalorische enterale Sondennahrung 20 mg bis 50 mg pro 100 mL Magnesium, 70 mg bis 130 mg pro 100 mL Natrium und 90 mg bis 160 mg pro 100 mL Chlorid umfasst.

3. Hochkalorische enterale Sondennahrung gemäß einem der vorstehenden Ansprüche, wobei die hochkalorische enterale Sondennahrung etwa 9,0 g bis etwa 14,0 g Protein pro 100 mL umfasst, bevorzugt wobei die hochkalorische enterale Sondennahrung etwa 10,0 g Protein bis etwa 14,0 g pro 100 mL umfasst, am meisten bevorzugt wobei die hochkalorische enterale Sondennahrung etwa 10,0 g bis etwa 12,0 g Protein pro 100 mL umfasst.

4. Hochkalorische enterale Sondennahrung gemäß einem der vorstehenden Ansprüche, wobei die hochkalorische enterale Sondennahrung eine Energiedichte von 2,0 kcal bis 3,5 kcal pro mL, hat, bevorzugt wobei die hochkalorische enterale Sondennahrung eine Energiedichte von 2,0 kcal bis 3,0 kcal pro mL hat, am meisten bevorzugt wobei die hochkalorische enterale Sondennahrung eine Energiedichte von 2,0 kcal pro mL bis 2,4 kcal pro mL hat.

5. Hochkalorische enterale Sondennahrung gemäß einem der vorstehenden Ansprüche, wobei das Protein etwa 20% Gew. bis etwa 70% Gew. Gesamtmilchprotein und etwa 80% Gew. bis etwa 30% Gew. Calcium-Caseinat umfasst, bevorzugt wobei das Protein aus etwa 40% Gew. Gesamtmilchprotein und etwa 60% Gew. Calcium-Caseinat besteht.

6. Hochkalorische enterale Sondennahrung gemäß einem der vorstehenden Anspruche, wobei das Gesamtmilchprotein aus etwa 90% bis etwa 94% Casein und aus etwa 6% bis etwa 10% Molkenprotein besteht, bevorzugt wobei das Gesamtmilchprotein aus 92% Casein und 8% Molkenprotein besteht.

7. Hochkalorische enterale Sondennahrung gemäß einem der vorstehenden Ansprüche, wobei die hochkalorische enterale Sondennahrung eine Viskositat von etwa 50 bis etwa 160 mPa s besitzt, bevorzugt wobei die hochkalorische enterale Sondennahrung eine Viskosität von etwa 60 bis etwa 150 mPa s besitzt.

8. Hochkalorische enterale Sondennahrung gemäß einem der vorstehenden Ansprüche, wobei die hochkalorische enterale Sondennahrung eine Osmolaritat von etwa 350 bis etwa 700 mosmol/L besitzt, bevorzugt wobei die hochkalorische enterale Sondennahrung eine Osmolaritat von etwa 420 mosmol/L bis etwa 500 mosmol/L besitzt, am meisten bevorzugt wobei die hochkalorische enterale Sondennahrung eine Osmolaritat von etwa 420 mosmol/L bis etwa 440 mosmol/L besitzt.

9. Hochkalorische enterale Sondennahrung gemäß einem der vorstehenden Ansprüche, wobei die hochkalorische enterale Sondennahrung mindestens einen weiteren Mineralstoff umfasst, der ausgewählt ist aus der Gruppe bestehend aus 100 mg bis 190 mg pro 100 mL Kalium, 150 mg bis 220 mg pro 100 mL Calcium, 90 mg bis 150 mg pro 100 mL Phosphor oder einer Kombination davon, bevorzugt wobei die hochkalorische enterale Sondennahrung pro 100 mL 30 mg Magnesium, 80 mg Natrium, 160 mg Kalium, 200 mg Calcium, 120 mg Phosphor und 126 mg Chlorid umfasst.

10. Hochkalorische enterale Sondennahrung gemäß einem der vorstehenden Ansprüche, wobeindie hochkalorische enterale Sondennahrung Natrium und Chlorid in äquimolarer Menge umfasst.

11. Hochkalorische enterale Sondennahrung gemäß einem der vorstehenden Ansprüche, wobei 32% bis 38% des Energiegehalts der hochkalorischen enteralen Sondennahrung aus Kohlenhydraten stammen, bevorzugt wobei die hochkalorische enterale Sondennahrung keine Saccharose enthält.

12. Hochkalorische enterale Sondennahrung gemäß einem der vorstehenden Ansprüche zur Verwendung in der Ernährung eines Patienten, wobei der Patient an einer Erkrankung aus der Gruppe kardiovaskuläre Erkrankung, chronisch obstruktive Lungenerkrankung, kardiales, renales oder hepatogenes Ödem, Lungenödem, Erkrankung der Leber, Aszites, Nierenerkrankungen, neurologische Erkrankung, Krebserkrankung, schwere und/oder lang anhaltende Infektion, Trauma, Peritonitis, Sepsis, Verbrennung, Dekubitus, Mukoviszidose oder einer Kombination davon, erkrankt ist.

13. Hochkalorische enterale Sondennahrung gemäß einem der Ansprüche 1 bis 11 zur Verwendung in der Behandlung oder Vorbeugung von Kachexie, Proteinmangel oder Protein-Energie Mangelsyndrom bei einem Patienten.

14. Verfahren zur Herstellung einer hochkalorischen enteralen Sondennahrung gemäß einem der Ansprüche 1 bis 11, umfassend die Schritte:
a) Mischen der in der hochkalorischen enteralen Sondennahrung enthaltenen Bestandteile; und b) Erhitzen der in Schritt a) erhaltenen Mischung auf 120 °C bis 145 °C, wobei das Erhitzen in Schritt b) erfolgt, bis ein F0-Wert von 6 bis 15 erreicht ist.

15. Verfahren gemäß Anspruch 14, **dadurch gekennzeichnet, dass** die hochkalorische enterale Sondennahrung Gesamtmilchprotein umfassend etwa 80% Gew. Casein und etwa 20% Gew. Molkenprotein umfasst,ferner **dadurch gekennzeichnet, dass** das Erhitzen in Schritt b) bei 120 °C bis 130 °C, bevorzugt bei 126 °C bis 129 °C, erfolgt, oder **dadurch gekennzeichnet, dass** die die hochkalorische enterale Sondennahrung Gesamtmilchprotein umfassend etwa 90% Gew. bis etwa 99% Gew. Casein und etwa 1% Gew. bis etwa 10% Gew. Molkenprotein umfasst, bevorzugt wobei das Gesamtmilchprotein etwa 92% Gew. Casein und etwa 8% Gew. Molkenprotein umfasst, ferner **dadurch gekennzeichnet, dass** das Erhitzen in Schritt b) bei 136 °C bis 145 °C, bevorzugt bei 138 °C bis 143 °C, erfolgt.

## Claims

1. High calorie enteral tube formula having an energy content of at least 2.0 kcal per ml, **characterized in that** the high calorie enteral tube formula comprises, per 100 ml, about 8.0 g to about 14.0 g of protein and a mineral which is selected from the group consisting of at least 20 mg per 100 ml of magnesium, at least 70 mg per 100 ml of sodium, at least 90 mg per 100 ml of chloride, or a combination thereof, wherein the protein comprises total milk protein and calcium caseinate and wherein the high calorie enteral tube formula, at a temperature of 20°C, and at a shear rate of 1 s⁻¹, has a viscosity of about 50 to about 180 mPas.

2. High calorie enteral tube formula according to Claim 1, wherein the high calorie enteral tube formula comprises a mineral which is selected from the group consisting of 20 mg to 50 mg per 100 ml of magnesium, 70 mg to 130 mg per 100 ml of sodium, 90 mg to 160 mg per 100 ml of chloride or a combination thereof, preferably wherein the high calorie enteral tube formula comprises 20 mg to 50 mg per 100 ml of magnesium, 70 mg to 130 mg per 100 ml of sodium, and 90 mg to 160 mg per 100 ml of chloride.

3. High calorie enteral tube formula according to any one of the preceding claims, wherein the high calorie enteral tube formula comprises about 9.0 g to about 14.0 g of protein per 100 ml, preferably wherein the high calorie enteral tube formula comprises about 10.0 g of protein to about 14.0 g per 100 ml, most preferably wherein the high calorie enteral tube formula comprises about 10.0 g to about 12.0 g of protein per 100 ml.

4. High calorie enteral tube formula according to any one of the preceding claims, wherein the high calorie enteral tube formula has an energy density from 2.0 kcal to 3.5 kcal per ml, preferably wherein the high calorie enteral tube formula has an energy density from 2.0 kcal to 3.0 kcal per ml, most preferably wherein the high calorie enteral tube formula has an energy density from 2.0 kcal per ml to 2.4 kcal per ml.

5. High calorie enteral tube formula according to any one of the preceding claims, wherein the protein comprises about 20% by weight to about 70% by weight total milk protein and about 80% by weight to about 30% by weight calcium caseinate, preferably wherein the protein consists of about 40% by weight total milk protein and about 60% by weight calcium caseinate.

6. High calorie enteral tube formula according to any one of the preceding claims, wherein the total milk protein consists of about 90% to about 94% casein and about 6% to about 10% whey protein, preferably wherein the total milk protein consists of 92% casein and 8% whey protein.

7. High calorie enteral tube formula according to any one of the preceding claims, wherein the high calorie enteral tube formula has a viscosity from about 50 to about 160 mPas, preferably wherein the high calorie enteral tube formula has a viscosity from about 60 to about 150 mPas.

8. High calorie enteral tube formula according to any one of the preceding claims, wherein the high calorie enteral tube formula has an osmolarity from about 350 to about 700 mosmol/l, preferably wherein the high calorie enteral tube formula has an osmolarity from about 420 mosmol/l to about 500 mosmol/l, most preferably wherein the high calorie enteral tube formula has an osmolarity from about 420 mosmol/l to about 440 mosmol/l.

9. High calorie enteral tube formula according to any one of the preceding claims, wherein the high calorie enteral tube formula comprises at least one further mineral which is selected from the group consisting of 100 mg to 190 mg per 100 ml of potassium, 150 mg to 220 mg per 100 ml of calcium, 90 mg to 150 mg per 100 ml of phosphorus or a combination thereof, preferably wherein the high calorie enteral tube formula comprises, per 100 ml, 30 mg of magnesium, 80 mg of sodium, 160 mg of potassium, 200 mg of calcium, 120 mg of phosphorus and 126 mg of chloride.

10. High calorie enteral tube formula according to any one of the preceding claims, wherein the high calorie enteral tube formula comprises sodium and chloride in equimolar amounts.

11. High calorie enteral tube formula according to any one of the preceding claims, wherein 32% to 38% of the energy content of the high calorie enteral tube formula originates from carbohydrates, preferably wherein the high calorie enteral tube formula does not contain any sucrose.

12. High calorie enteral tube formula according to any one of the preceding claims for use in the nutrition of a patient, wherein the patient has a disease from the group cardiovascular disease, chronic obstructive pulmonary disease, cardial, renal or hepatogenic oedema, pulmonary oedema, disease of the liver, ascites, kidney diseases, neurological disease, cancer, severe and/or long-lasting infection, trauma, peritonitis, sepsis, burns, decubitus ulcer, cystic fibrosis or a combination thereof.

13. High calorie enteral tube formula according to any one of Claims 1 to 11 for use in the treatment or prevention of cachexia, protein deficiency, or protein-energy deficiency syndrome in a patient.

14. Method for producing a high calorie enteral tube formula according to any one of Claims 1 to 11, comprising the steps:
a) mixing the components contained in the high calorie enteral tube formula; and b) heating the mixture obtained in step a) to 120°C to 145°C, wherein the heating in step b) is performed until a F0 value from 6 to 15 is achieved.

15. Method according to Claim 14, **characterized in that** the high calorie enteral tube formula comprises total milk protein comprising about 80% by weight casein and about 20% by weight whey protein, further **characterized in that** the heating in step b) is performed at 120°C to 130°C, preferably at 126°C to 129°C, or **characterized in that** the high calorie enteral tube formula comprises total milk protein comprising about 90% by weight to about 99% by weight casein and about 1% by weight to about 10% by weight whey protein, preferably wherein the total milk protein comprises about 92% by weight casein and about 8% by weight whey protein, further **characterized in that** the heating in step b) is performed at 136°C to 145°C, preferably at 138°C to 143°C.

## Revendications

1. Nutriment hautement calorique pour alimentation entérale par sonde présentant une teneur énergétique d'au moins 2,0 kcal par ml, **caractérisé en ce que** le nutriment hautement calorique pour alimentation entérale par sonde comprend, par 100 ml, environ 8,0 g à environ 14,0 g de protéines ainsi qu'une substance minérale, qui est choisie dans le groupe constitué par au moins 20 mg par 100 ml de magnésium, au moins 70 mg par 100 ml de sodium, au moins 90 mg par 100 ml de chlorure ou une combinaison de ceux-ci, les protéines comprenant les protéines totales du lait et du caséinate de calcium et le nutriment hautement calorique pour alimentation entérale par sonde présentant, à une température de 20°C et à une vitesse de cisaillement de 1 s⁻¹, une viscosité d'environ 50 à environ 180 mPa.s.

2. Nutriment hautement calorique pour alimentation entérale par sonde selon la revendication 1, le nutriment hautement calorique pour alimentation entérale par sonde comprenant une substance minérale qui est choisie dans le groupe constitué par 20 mg à 50 mg par 100 ml de magnésium, 70 mg à 130 mg par 100 ml de sodium, 90 mg à 160 mg par 100 ml de chlorure ou une combinaison de ceux-ci, le nutriment hautement calorique pour alimentation entérale par sonde comprenant de préférence 20 mg à 50 mg par 100 ml de magnésium, 70 mg à 130 mg par 100 ml de sodium et 90 mg à 160 mg par 100 ml de chlorure.

3. Nutriment hautement calorique pour alimentation entérale par sonde selon l'une quelconque des revendications précédentes, le nutriment hautement calorique pour alimentation entérale par sonde comprenant environ 9,0 g à environ 14,0 g de protéines par 100 ml, le nutriment hautement calorique pour alimentation entérale par sonde comprenant de préférence environ 10,0 g à environ 14,0 g de protéines par 100 ml, le nutriment hautement calorique pour alimentation entérale par sonde comprenant le plus préférablement environ 10,0 g à environ 12,0 g de protéines par 100 ml.

4. Nutriment hautement calorique pour alimentation entérale par sonde selon l'une quelconque des revendications précédentes, le nutriment hautement calorique pour alimentation entérale par sonde présentant une densité énergétique de 2,0 kcal à 3,5 kcal par ml, le nutriment hautement calorique pour alimentation entérale par sonde présentant de préférence une densité énergétique de 2,0 kcal à 3,0 kcal par ml, le nutriment hautement calorique pour alimentation entérale par sonde présentant le plus préférablement une densité énergétique de 2,0 kcal par ml à 2,4 kcal par ml.

5. Nutriment hautement calorique pour alimentation entérale par sonde selon l'une quelconque des revendications précédentes, les protéines étant constituées par environ 20% en poids à environ 70% en poids de protéines totales du lait et environ 80% en poids à environ 30% en poids de caséinate de calcium, les protéines étant de préférence constituées par environ 40% en poids de protéines totales du lait et environ 60% en poids de caséinate de calcium.

6. Nutriment hautement calorique pour alimentation entérale par sonde selon l'une quelconque des revendications précédentes, les protéines totales du lait étant constituées par environ 90% à environ 94% de caséine et par environ 6% à environ 10% de protéines de lactosérum, les protéines totales du lait étant de préférence constituées par 92% de caséine et 8% de protéines de lactosérum.

7. Nutriment hautement calorique pour alimentation entérale par sonde selon l'une quelconque des revendications précédentes, le nutriment hautement calorique pour alimentation entérale par sonde présentant une viscosité d'environ 50 à environ 160 mPa.s, le nutriment hautement calorique pour alimentation entérale par sonde présentant de préférence une viscosité d'environ 60 à environ 150 mPa.s.

8. Nutriment hautement calorique pour alimentation entérale par sonde selon l'une quelconque des revendications précédentes, le nutriment hautement calorique pour alimentation entérale par sonde présentant une osmolarité d'environ 350 à environ 700 mOsmoles/l, le nutriment hautement calorique pour alimentation entérale par sonde présentant de préférence une osmolarité d'environ 420 mOsmoles/l à environ 500 mOsmoles/l, le nutriment hautement calorique pour alimentation entérale par sonde présentant le plus préférablement une osmolarité d'environ 420 mOsmoles/l à environ 440 mOsmoles/l.

9. Nutriment hautement calorique pour alimentation entérale par sonde selon l'une quelconque des revendications précédentes, le nutriment hautement calorique pour alimentation comprenant au moins une autre substance minérale qui est choisie dans le groupe constitué par 100 mg à 190 mg par 100 ml de potassium, 150 mg à 220 mg par 100 ml de calcium, 90 mg à 150 mg par 100 ml de phosphore ou une combinaison de ceux-ci, le nutriment hautement calorique pour alimentation entérale par sonde contenant de préférence par 100 ml, 30 mg de magnésium, 80 mg de sodium, 160 mg de potassium, 200 mg de calcium, 120 mg de phosphore et 126 mg de chlorure.

10. Nutriment hautement calorique pour alimentation entérale par sonde selon l'une quelconque des revendications, le nutriment hautement calorique pour alimentation entérale par sonde comprenant le sodium et le chlorure en des quantités équimolaires.

11. Nutriment hautement calorique pour alimentation entérale par sonde selon l'une quelconque des revendications précédentes, 32% à 38% de la teneur énergétique du nutriment hautement calorique pour alimentation entérale par sonde provenant d'hydrates de carbone, le nutriment hautement calorique pour alimentation entérale par sonde ne contenant de préférence pas de saccharose.

12. Nutriment hautement calorique pour alimentation entérale par sonde selon l'une quelconque des revendications précédentes, destiné à être utilisé dans l'alimentation d'un patient, le patient souffrant d'une maladie du groupe formé par une maladie cardiovasculaire, la bronchopneumonie pulmonaire chronique obstructive, l'oedème cardiaque, rénal ou hépatogène, un oedème pulmonaire, une maladie du foie, une ascite, les maladies rénales, une maladie neurologique, une maladie cancéreuse, une infection sévère et/ou durable, un traumatisme, une péritonite, une septicémie, une brûlure, une escarre, la mucoviscidose ou une combinaison de ceux-ci.

13. Nutriment hautement calorique pour alimentation entérale par sonde selon l'une quelconque des revendications 1 à 11 destiné à une utilisation dans le traitement ou la prévention de la cachexie, d'une carence protéinique ou d'un syndrome de carence d'énergie protéinique.

14. Procédé pour la préparation d'un nutriment hautement calorique pour alimentation entérale par sonde selon l'une quelconque des revendications 1 à 11, comprenant les étapes :
a) mélange des constituants contenus dans le nutriment hautement calorique pour alimentation entérale par sonde ; et b) chauffage du mélange obtenu dans l'étape a) à 120°C jusqu'à 145°C, le chauffage dans l'étape b) étant réalisé jusqu'à ce qu'une valeur F₀ de 6 à 15 soit atteinte.

15. Procédé selon la revendication 14, **caractérisé en ce que** le nutriment hautement calorique pour alimentation entérale par sonde comprend les protéines totales du lait, comprenant environ 80% en poids de caséine et environ 20% en poids de protéines de lactosérum, en outre **caractérisé en ce que** le chauffage dans l'étape b) est réalisé à 120°C jusqu'à 130°C, de préférence à 126°C jusqu'à 129°C, ou **caractérisé en ce que** le nutriment hautement calorique pour alimentation entérale par sonde comprend les protéines totales du lait, comprenant environ 90% en poids à environ 99% en poids de caséine et environ 1% en poids à environ 10% en poids de protéines de lactosérum, les protéines totales du lait comprenant de préférence environ 92% en poids de caséine et environ 8% en poids des protéines de lactosérum, en outre **caractérisé en ce que** le chauffage dans l'étape b) est réalisé à 136°C jusqu'à 145°C, de préférence à 138°C jusqu'à 143°C.
